(19) Europäisches Patentamt
European Patent Office
Office européen des brevets

(11) **EP 3 404 644 A1**

(12) **EUROPEAN PATENT APPLICATION**

(43) Date of publication:
**21.11.2018 Bulletin 2018/47**

(51) Int Cl.:
***G09F 3/10*** (2006.01)

(21) Application number: **18180060.8**

(22) Date of filing: **28.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2011 US 201113307306**

(62) Document number(s) of the earlier application(s) in accordance with Art. 76 EPC:
**12799006.7 / 2 785 601**

(71) Applicant: **Avery Dennison Corporation Pasadena, CA 91103 (US)**

(72) Inventors:
• **Iyer, Pradeep, S.**
  **Pasadena, CA California 91103 (US)**
• **Edwards, David, N.**
  **Pasadena, CA California 91103 (US)**
• **Licon, Mark, A.**
  **Pasadena, CA California 91103 (US)**

• **Kian, Kourosh**
  **Pasadena, CA California 91103 (US)**
• **Lenkl, Johannes**
  **Pasadena, CA California 91103 (US)**
• **Bharadwaj, Rishikesh, K.**
  **Pasadena, CA California 91103 (US)**
• **Mallya, Prakash**
  **Pasadena, CA California 91103 (US)**
• **Hseih, Dong**
  **Pasadena, CA California 91103 (US)**

(74) Representative: **Müller-Boré & Partner Patentanwälte PartG mbB Friedenheimer Brücke 21 80639 München (DE)**

Remarks:
This application was filed on 27-06-2018 as a divisional application to the application mentioned under INID code 62.

(54) **LINERLESS LABELS AND ACTIVATABLE ADHESIVES, SYSTEMS, MACHINES AND METHODS THEREFOR**

(57) The present invention relates to a linerless activatable adhesive label (100) comprising:
a facestock layer (110);
an adhesive layer (120) that is coupled to the facestock layer and includes:
i. an adhesive base polymer including butyl acrylate, styrene, methyl methacrylate, methacrylic acid, acrylic acid, at least one multifunctional monomer, and at least one chain transfer agent,

ii. a plasticizer, and
iii. a tackifier; and

the activatable adhesive label (100) is configured to be exposed to a radiant energy; and
the radiant energy has a wavelength and an intensity that results in the adhesive layer becoming tacky after exposure to the radiant energy.

FIG. 1

**Description**

**Cross-Reference to Related Application**

The present application claims the benefit of U.S. Patent Application No. 13/307,306 filed November 30, 2012, which is incorporated herein by reference in its entirety.

**Field of the Invention**

The present invention generally relates to systems and machines for activatable adhesive labels, and to labels and adhesives for linerless and heat activatable uses. More specifically, the invention relates to systems and methods for activatable adhesives and activation adhesives of linerless labels using radiation and temperature changes and to linerless labels and adhesives useful in activatable technologies.

**Background of the Invention**

Traditional pressure sensitive labels are supplied to the user affixed to a release liner. These release liners are typically silicone coated, and, as such, are not usable as sources for recycled paper. In an effort to reduce cost, improve efficiencies, and reduce environmental impact, consumer demand for labels without liners has increased in recent years. The most common forms of these labels are "linerless labels" and "activatable labels".

"Linerless labels" have a sticky side and a release-coated side so they can be wound upon themselves into rolls. The use of these linerless labels requires either preprinting or special printers that are configured to print on release coating. The equipment used to manipulate linerless labels includes special rollers and platens that are configured to contact the sticky side of the labels. Despite many improvements in this equipment, adhesive buildup still occurs in various sections of the equipment. Because of these shortcomings, and also the high price of the final sticky "linerless" product, these linerless labels have not received wide customer acceptance.

"Activatable labels" are supplied to the end user in a non-tacky state, and then the labels are activated, i.e., the label's adhesive is activated, to a tacky state just prior to application to the intended object. Most often, activatable labels are printed with indicia prior to activation. Known activation schemes include the use of ultraviolet ("UV") energy to heat the adhesive (see U.S. Patent 6,492,019 to Shipston et al.), corona treatment to activate the surface (see U.S. Patent 6,326,450 to Shipston et al.), radiant heat to warm the adhesive (see U.S. Patent 6,500,536 to Yamada et al.), moisture to activate a rewettable adhesive (see U.S. Patent 6,803,100 to Hintz et al.), microencapsulating an activator material, which can then be crushed to allow the activator to mix with the rest of the formulation and activate the adhesive (see U.S. Patent 7,026,047 to Krolzig), overcoating the adhesive with a detackifier layer, which is later removed by heat or mechanical means (see U.S. Patent 5,569,515 to Rice et al.), and ultrasound energy to activate the adhesive (see U.S. Patent 5,702,771 to Shipston et al.).

By far, the most common activation scheme utilizes heat activation, i.e., the activation of the label using heat. For heat activation, various techniques have been proposed. These include the use of the following: heated drums or rollers (see U.S. Patent Nos. 5,749,990 and 5,480,502 to Rello et al.), direct contact with the heating element (see U.S. Patent Nos. 6,388,692 to Iwata et al. and 6,501,495 to Ichikawa et al.), microwave energy (see U.S. Patent No. 3,461,014 to James), heated belts in contact with the adhesive (see U.S. Patent Nos. 4,468,274 to Adachi and 6,031,553 to Nagamoto et al.), and infrared ("IR") and near infrared radiation ("NIR") (see U.S. Patent Nos. 3,247,041 to Henderson and 4,156,626 to Souder). In addition, general methods for heating using radio frequency ("RF") energy, inductive heat, radiant heat, and visible light also are well known and could be applied to this list of activation methods. These techniques have all proven useful at low-speed operations, but as application speeds increase, these methods all suffer in that the exposure times of the labels to the heating elements must somehow be increased in order to gain sufficient heating. Either the size or the cost of the units capable of supplying sufficient heating has thwarted high-speed applications.

One way to overcome the need for larger or longer heaters is to increase the ability of the adhesive to absorb the energy from the heating devices. U.S. Patent Nos. 4,156,626 to Souder and 6,043,190 to Ichikawa et al., and U.S. Patent Application Publication Numbers 2003/0041963 and 2004/0166309 to Gong et al. all describe the use of NIR absorbers to increase the energy absorbance by adhesives. Hence, the use of NIR absorbers and high-intensity NIR lamps might appear to be a viable route for activating the adhesive. Although satisfactory in many respects, disadvantages exist involving currently known activatable labels, labeling systems, and related methods.

Various details and disclosure concerning this type of technology is found in US Application Serial No. 13/119,006, a National Stage entry of PCT/US10/47428, published as WO 2011/037732, published March 31, 2011, to Kian et al.

Both rubber-based and acrylic-based pressure sensitive adhesives (PSAs) are known. In 1966, C. Dalquist identified a1 second creep compliance greater than $1 \times 10^{-6}$ cm$^2$/dyne as the efficient contact criterium of a good PSA.

A more recent discussion of PSAs in the Handbook of Pressure Sensitive Adhesive Technology (2d Edition), D. Satas, ed. (1989), (hereafter, "Handbook"), pages 172-176, incorporated by reference herein, identifies glass transition temperature ($T_g$) and modulus (G') at the application (use) temperature as the most important requirements for PSA performance. Both properties are a function of the identities and amounts of monomers that comprise the PSA polymer(s). Thus, poly(acrylic acid) is not a PSA, but a copolymer of acrylic acid with high mole % of 2-ethylhexyl acrylate is.

The typical values of G' and $T_g$ for label and tape PSAs are described in the *Handbook.* For a tape, G' at room temperature is approximately $5x10^5$ to $2x10^6$ dyne/cm$^2$, and $T_g$ is approximately -15°C to 10°C; while labels have a lower value of G' at room temperature, i.e., about $2x10^5$ to $8x10^5$ dyne/cm$^2$. $T_g$ requirements for cold temperature, permanent, and removable applications are different, as is known in the art. Thus, cold temperature label PSAs generally require a $T_g$ of from about -30°C to -10°C.

All patents, published applications, and articles noted herein are hereby incorporated by reference in their entirety.

**Brief Summary of the Invention**

The embodiments of the present disclosure described below are not intended to be exhaustive or to limit the invention to the precise forms disclosed in the following detailed description. Rather, the embodiments are chosen and described so that others skilled in the art may appreciate and understand the principles and practices of the present disclosure.

An exemplary embodiment of the present disclosure is an aqueous adhesive composition which is activatable by exposure to infrared ("IR") radiation and which exhibits pressure sensitive adhesive properties once activated by IR or by heating. The adhesive composition comprises (i) an emulsion base copolymer exhibiting a glass transition temperature Tg above 25°C and a weight average molecular weight within a range of from 15,000 Daltons to 100,000 Daltons, (ii) a solid plasticizer for such copolymer exhibiting a melting point above 40°C, and (iii) a high softening point tackifier.

Another exemplary embodiment is an adhesive that includes a plasticizer, a tackifier, and an adhesive base polymer that includes a lower alkyl acrylate such as butyl acrylate, styrene, methyl methacrylate, methacrylic acid, and acrylic acid.

Generally, the present adhesive system comprises from about 20% to about 35% of an adhesive base polymer, from about 50% to about 75% of a plasticizer, and from about 5% to about 20% of a tackifier. Preferably, this type of adhesive system comprises from about 24% to about 30% of an adhesive base polymer, from about 56% to about 68% of a plasticizer, and from about 8% to about 16% of a tackifier.

In a more detailed embodiment, particular formulations are provided for the adhesive systems. In one preferred composition, the adhesive comprises about 25% of an adhesive base polymer, about 66% of a plasticizer, and about 9% of a tackifier. In another preferred composition, the adhesive comprises about 25.5% of an adhesive base polymer, about 66% of a plasticizer, and about 8.5% of a tackifier.

In a more detailed embodiment, particular linerless label adhesive formulations are provided that incorporate an adhesive base polymer, a tackifier, and a plasticizer that contains substantial quantities of plant-based molecule to enhance the bio-based content of the adhesive formulation and of the linerless labels. In a preferred system, the plant-based molecule comprises at least 20%, typically over 20% of the plasticizer.

Generally, in one embodiment, an adhesive base polymer for the labels, machine, system and method includes from about 10% to about 50% of at least one lower alkyl acrylate, from about 20% to about 85% styrene, from about 1% to about 35% methyl methacrylate, from about 0.5% to about 5% methacrylic acid, from about 0.5% to about 5% acrylic acid, from about 0% to about 5.0% of at least one multifunctional monomer, and from about 0% to about 5.0% of at least one chain transfer agent. In a more detailed aspect, the adhesive base polymer comprises from about 12% to about 48% of at least one lower alkyl acrylate, from about 23% to about 78% styrene, from about 3% to about 30% methyl methacrylate, from about 1% to about 2% methacrylic acid, from about 1% to about 3% acrylic acid, from about 0.5% to about 2.5% of at least one multifunctional monomer, and from about 1.0% to about 4.0% of at least one chain transfer agent.

In another detailed embodiment, particular formulations are of a type incorporating adhesive base polymers where the butyl acrylate is about 37.2% of an adhesive base polymer, the styrene is about 29.3% of the adhesive base polymer, the methyl methacrylate is about 29.3% of the adhesive base polymer, the methacrylic acid is about 1.7% of the adhesive base polymer, and the acrylic acid is about 2.5% of the adhesive base polymer. In another embodiment, the butyl acrylate is about 48.0% of the adhesive base component, the styrene is about 23.9% of the adhesive base component, the methyl methacrylate is about 23.9% of the adhesive base component, the methacrylic acid is about 1.7% of the adhesive base component, and the acrylic acid is about 2.5% of the adhesive base component. In still another embodiment, the butyl acrylate is about 12.8% of the adhesive base component, the styrene is about 77.6% of the adhesive base component, the methyl methacrylate is about 3.2% of the adhesive base component, the methacrylic acid is about 1.2% of the adhesive base component, and the acrylic acid is about 1.7% of the adhesive base component, a multifunctional monomer amount is 1.5%, and a chain transfer agent amount is 1.9%.

In other more detailed features, an adhesive is white. Also, in other features, the adhesive does not include and so, is free from carbon black, graphite, an ink, a dye, a pigment, and/or a colorant.

In addition, a plasticizer can be UNIPLEX 260 or glyceryl tribenzoate having about 22% bio-based content, and a tackifier can be Tamanol E-102A and Super Ester E-730 or Super Ester E-650. The plasticizer can be UNIPLEX 250 or dicyclohexyl phthalate, and the tackifier can be ARAKAWA SE-E 650.

In other more detailed features, a plasticizer is configured to melt upon and/or after exposure to energy. Also, an adhesive can be configured to be activated by exposure to energy for less than one second. In addition, the adhesive can be configured to be activated by exposure to energy for less than 0.5 second or for less than 0.3 second.

In other more detailed features, the energy is near infrared radiation ("NIR"), short IR energy, Mid Wave IR energy, IR energy, microwave energy, RF energy, inductive heat energy, visible light energy, radiant heat energy, or UV energy. Also, the IR energy can have a peak wavelength from approximately 0.8 μm to approximately 3.0 μm. In addition, the IR energy can have a second peak wavelength from approximately 1.2 μm to approximately 2.5 μm.

In other more detailed features, a system and machine cooperate with the adhesive formulation and label to activate the adhesive so same has a tackiness, and the adhesive's tackiness is maintained for at least approximately two minutes after the adhesive is activated.

Another exemplary embodiment, the system, machine and method apply a label that includes a facestock layer and an adhesive layer that is coupled to the facestock layer. The adhesive layer includes a plasticizer, a tackifier, and an adhesive base polymer that includes butyl acrylate, styrene, methyl methacrylate, methacrylic acid, and acrylic acid.

In other more detailed features, a label is configured to be exposed to radiant energy, the radiant energy has a wavelength and an intensity that results in the adhesive layer becoming tacky after exposure to the radiant energy, and a facestock layer is not discolored after the exposure of the label to the radiant energy. Also, the facestock layer can be made of paper, recycled paper, polymer film, metalized paper, metalized film, paper backed foil, or metal foil.

In other more detailed features, the system, machine and method apply a label configured to be applied to the item, and to be repositioned for approximately one minute after the label is applied to the item. Also, an adhesive layer can be activatable, have a tackiness, and be configured to be applied to the item, so that after the label is applied to the item, the adhesive layer's tackiness prevents the label from inadvertently being removed from the item. In addition, the label can be configured to be applied to the item, and after the label is applied to the item, the label permanently bonds with the item after approximately two hours.

In another exemplary embodiment, the system, machine and method apply a label assembly comprising a facestock layer and a heat activatable adhesive layer, and a functional coating layer disposed between the adhesive layer and the facestock layer.

Another exemplary embodiment is a label that includes a facestock layer, an adhesive layer, and a reflective layer that is coupled between the facestock layer and the adhesive layer.

Another exemplary embodiment applies a label that includes a facestock layer, an adhesive layer, and a barrier layer disposed between the facestock layer and the adhesive layer. Another exemplary embodiment applies a label that includes a facestock layer, an adhesive layer, and a primer layer disposed between the facestock layer and the adhesive layer. When included, the barrier and/or primer layer can be added to provide thermally insulating properties to facilitate direct thermal printing of linerless laminates.

In other more detailed features, an adhesive layer of the various linerless label assemblies includes a plasticizer, a tackifier, and an adhesive base polymer including butyl acrylate, styrene, methyl methacrylate, methacrylic acid and acrylic acid.

In other more detailed features, a system, machine and method apply a label so as to be configured to be exposed to a radiant energy, the radiant energy has a wavelength and an intensity that results in an adhesive layer becoming tacky after exposure to the radiant energy, and a facestock layer is not discolored after the exposure of a label to the radiant energy. Also, the facestock layer can have a bottom surface, and the label can include a reflective layer that is made of a material that is applied as a coating to the bottom surface of the facestock layer. In addition, the material of the reflective layer can be gold, silver, aluminum, or copper. Furthermore, the reflective layer can have a thickness of not greater than one micron.

In other more detailed features of labels applied by a system, machine or method have a reflective layer with a reflectivity value, and the reflectivity value is greater than approximately 90 percent. Also, the reflective layer can underlie only a portion of the facestock layer. In addition, an adhesive layer can have a first surface, the reflective layer can have a second surface that is adjacent to the first surface, and the second surface can be textured. Furthermore, the second surface's texture can be configured to be retroreflective.

In other more detailed features, a system, machine and method are arranged so a label is configured to be exposed to a radiant energy, the radiant energy has a wavelength and an intensity that results in the adhesive layer becoming tacky after exposure to the radiant energy, and the facestock layer is not discolored after the exposure of the label to the radiant energy. Also, the facestock layer can have a bottom surface, and the label can include a barrier layer that is made of a material that is applied as a coating to the bottom surface of the facestock layer. In addition, the material of the barrier layer is selected so as to prevent or at least significantly reduce discoloration of the facestock layer.

Another exemplary embodiment is a system that is configured to facilitate the application of an activatable label to an item. The system includes an energy source that is configured to emit energy and one or more actuators that are configured to receive the activatable label, transport the activatable label through the emitted energy, and transport the activatable label to a position where the activatable label is applied to the item. The activatable label includes an adhesive having a plasticizer, a tackifier, and an adhesive base polymer that includes butyl acrylate, styrene, methyl methacrylate, methacrylic acid, and acrylic acid.

Another exemplary embodiment is a system that is configured to facilitate the application of a flow of activatable labels to a flow of items. The system includes an energy source that is configured to emit energy, a printer that is configured to print indicia on the activatable label, and one or more actuators that are configured to receive the activatable labels, transport the activatable label past the printer that then prints the indicia on the activatable labels, transport the activatable labels through the emitted energy, and transport the activatable labels to a position where the activatable labels are applied to the items. The activatable labels include an adhesive having a plasticizer, a tackifier, and an adhesive base polymer that includes butyl acrylate, styrene, methyl methacrylate, methacrylic acid, and acrylic acid.

In other more detailed features of a system, machine and method, one or more actuators include a blower system, a conveyor belt, a paddle, a carrier sheet, a plunger, a vacuum drum, a roller, a vacuum belt, or a vacuum head. Also, an item to receive activatable labels can be a moving line of bottles, cans, containers, vessels, bags, pouches, envelopes, parcels, or boxes. In addition, the activatable label can be one of a stack of precut activatable labels.

An exemplary method applies a label with an activatable adhesive to an item as same move for processing. The method includes providing the label that has a first surface that is coated with the activatable adhesive, the adhesive including a plasticizer, a tackifier, and an adhesive base polymer including butyl acrylate, styrene, methyl methacrylate, methacrylic acid, and acrylic acid. The method also includes providing the item that has a second surface, providing a source of energy that is configured to output radiant energy, exposing the first surface of the label to the radiant energy that is output from the source of energy so the first surface of the label becomes tacky, and placing the first surface of the label in contact with the second surface of the item.

In other more detailed features, a label is pre-printed with indicia. Also, a method can further include providing a printer that is configured to print an image on the label, and printing the image on the label before the step of exposing the label to the radiant energy. Also the method includes providing a cutter that is configured to cut the dry label to a desired length before the activation stage. In addition, the label can include a facestock layer and an adhesive layer. The adhesive layer includes the adhesive base polymer, the plasticizer, and the tackifier, and the facestock layer is not discolored after the exposure of the label to the radiant energy.

In other more detailed features, providing a label includes providing a plurality of labels, providing an item includes providing a plurality of items, exposing the label includes exposing at least one of the plurality of the labels to the radiant energy, and placing the label in contact with the item includes placing one of the plurality of labels in contact with one of the plurality of items at a rate greater than 10 label per minute. Also, a step of placing the label in contact with the item depends on the item to label, it includes placing one of the plurality of labels in contact with one of the plurality of items at up to 100 labels per minute for some items and a rate of less than or equal to approximately 1,000 labels per minute in some applications.

Another exemplary method activates a label. The method includes providing the label having a first surface that is coated with an activatable adhesive, the activatable adhesive includes a plasticizer, a tackifier, and an adhesive base polymer including butyl acrylate, styrene, methyl methacrylate, methacrylic acid, and acrylic acid. The method also includes providing a source of energy that is configured to output radiant energy, and exposing the label to the radiant energy that is output from the source of energy so the first surface of the label becomes tacky.

In another exemplary embodiment, a system is provided for printing and applying linerless labels to articles. The system comprises a printer unit, a thermal activation unit downstream of the printer unit, and an applicator unit downstream of the thermal activation unit. The thermal activation unit includes a label transport assembly and one or more emitters that are configured to emit radiation to labels. In particularly preferred aspects of this system, unique sensor arrangements are utilized to assess whether label degradation condition(s) are occurring. And, optional quartz glass members are preferably used to improve safety and operability of the system.

Other features and advantages of the present invention will become apparent to those skilled in the art from the following detailed description. It is to be understood, however, that the detailed description of the various embodiments and specific examples, while indicating preferred and other embodiments of the present invention, are given by way of illustration and not limitation. Many changes and modifications within the scope of the present invention may be made without departing from the spirit thereof, and the invention includes all such modifications.

**Brief Description of the Drawings**

These, as well as other features, aspects, and advantages of this invention, will be more completely understood and appreciated by referring to the following more detailed description of the exemplary embodiments of the invention in conjunction with the accompanying drawings.

Fig. 1 is a sectional view of a preferred embodiment of an activatable label;

Fig. 2 is a diagram of an example of a system for activating and applying one or more labels to an item;

Fig. 3 is a diagram of another example of a system for printing and activating a stack of labels and applying them to an item;

Fig. 4 is a diagram of a preferred embodiment as an example of a machine and system for performing a print and apply type of label application;

Fig. 4A is detailed perspective view of a thermal activation unit of the Fig. 4 system for applying a label with an activatable adhesive to an item;

Fig. 4B is a front elevational view of the thermal activation unit of the Fig. 4 system for applying a label with an activatable adhesive to an item;

Fig. 4C is a plot of wavelength versus radiation intensity illustrating the spectrum of the short wave infrared emitter;

Fig. 4D is a wavelength plot of infrared transmission of a preferred quartz plate;

Fig. 4E is a plot of distance to emitters versus temperature concerning maximum label temperature for activatable linerless labels;

Fig. 4F is a plot of different distances to emitters (lamp to label) and temperature combinations for activatable linerless labels;

Fig. 4G is a plot of power percentage to emitters versus temperature on labels;

Fig. 4H is a plot of absorption of label components versus wavelength;

Fig. 4I is a tabulation of data showing relations between the absorption values on Fig. H and the absorption/reflection percentages;

Fig. 4J is a plot presenting the effect of carbon black loadings activated in a thermal activation unit at an 8 inch per second parameter;

Fig. 4K is a plot presenting the effect of carbon black loadings activated in a thermal activation unit at a 10 inch per second parameter;

Fig. 4L is a tabulation of data regarding print quality after linerless label activation with varying print contrast;

Fig. 4M is a detailed schematic view of orientation of a printed linerless label and an array of emitters for activation of a label adhesive;

Fig. 4N is a schematic illustration of a different orientation of a linerless label and emitters for activation of its adhesive;

Fig. 5 is a front elevational view, somewhat schematic in form, showing certain details for safety determinations in a thermal activation unit for linerless labels having activatable adhesive;

Fig. 6 is a schematic illustration of a preferred embodiment layered array of a label that is linerless and emitter activatable;

Fig. 7 is a plot of activation power and paper temperature data versus time and temperature;

Fig. 7B is a plot of activation power versus temperature;

Fig. 8 is a schematic elevation view of an applicator unit of a roll-on variety for applying activated linerless labels to items;

Fig. 9 is a schematic elevation view of an applicator unit of a tamp-on variety for applying activated linerless labels to items;

Fig. 10 is a schematic view of a vacuum plate option for an applicator unit of a tamp-on variety for applying activated linerless labels to items, especially well suited for smaller items;

Fig. 11 is a schematic elevation view of an applicator unit of a blow-on variety for applying activated linerless labels to items;

Fig. 12 is a flowchart of an example of a method for printing upon, activating and applying a flow of linerless labels to a flow of items;

Fig. 13 is a flowchart of another example of a method for printing upon, activating and applying a flow of linerless labels to a flow of items;

Fig.14 is a schematic illustration of a label structure;

Fig.15 is a schematic illustration of another label structure;

Fig. 16 is a schematic illustration of a further label structure;

Fig. 17 is a plan view of a label component;

Fig. 18 is a schematic illustration of a label structure;

Fig.19 is a plan view of another label component;

Fig. 20 is a plan view of a further label component;

Fig. 21 is a side view illustrating layers of a label component; and

Fig. 22 is a table reporting testing results for a variety of adhesive systems that concern varied plasticizer and tackifier components subjected to adhesive peel testing and blocking testing for adhesives, and including statistical information.

Unless otherwise indicated, the illustrations in the above figures are not necessarily drawn to scale.

**Detailed Description of the Embodiments**

The apparatuses and methods disclosed in this document are described in detail by way of examples and with reference to the figures. Unless otherwise specified, like numbers in the figures indicate references to the same, similar, or corresponding elements throughout the figures. It will be appreciated that modifications to disclosed and described examples, arrangements, configurations, components, elements, apparatuses, methods, materials, etc. can be made and may be desired for a specific application. In this disclosure, any identification of specific shapes, materials, techniques, arrangements, etc. are either related to a specific example presented or are merely a general description of such a shape, material, technique, arrangement, etc. Identifications of specific details or examples are not intended to be, and should not be, construed as mandatory or limiting unless specifically designated as such. Selected examples of apparatuses and methods are hereinafter disclosed and described in detail with reference made to the figures.

Use of energy absorbers in an adhesive formulation is well documented, but in certain instances, can result in darkly colored adhesives that are not compatible with the aesthetic requirements of today's consumer market. Activatable linerless label adhesives achieve maximum, or substantially maximum, energy transfer when in use by matching an absorbance range of an adhesive with an emission range of a radiation or energy source. The radiation source can emit a broad spectrum of energy wavelengths, typically with a peak wavelength, i.e. the wavelength associated with a peak energy value in the spectrum. The activatable linerless label adhesives demonstrate high absorption properties that allow for the activatable linerless label adhesives to be heat activated at faster rates while requiring less energy to power the radiation sources and without a drawback of having the darkly colored adhesive. Likewise, by tuning an adhesive absorption to approximately match a radiation emission, a majority of energy that is radiated upon an activatable linerless label is absorbed by an adhesive, leaving little energy remaining to couple with a facestock or an indicia printed upon the facestock. If energy is allowed to be absorbed by the facestock or the indicia, a resulting heating of the facestock or the indicia can cause discoloration of the facestock. While tuning the adhesive's absorption to the radiation source lowers the occurrence of this form of facestock discoloration, in some cases additional measures to avoid discoloration of the facestock are warranted. These include use of a functional layer such as a reflective layer and/or a barrier layer between the adhesive and the facestock. The functional layer could be in the form of a primer layer.

It will be appreciated that it is possible to provide activatable linerless label adhesives that are opaque or dark in appearance. Activatable linerless label adhesives that need to be transparent, translucent or white in appearance can be formulated to be substantially free of additives, pigments, dyes, inks, and/or colorants such as for example, carbon black or graphite. In other situations, the activatable linerless label adhesives may contain one or more additives, pigments, dyes, inks, and/or colorants such as for example carbon black or graphite.

An important attribute of the activatable adhesive is its ability to stay in an activated state, i.e., the adhesive is in a tacky state, long enough to allow application of the activatable linerless label to an item, such as a container or an article, before the adhesive loses its tackiness. This time period is commonly referred to as an "open time" of the adhesive. Depending on an application speed of the activatable linerless label to the item, and a distance between a activating device and a point where the activatable linerless label is applied to the item, this open time could be a fraction of a second and as long as several minutes or more. Embodiments of the adhesive can be repositionable for approximately 60 seconds, e.g., one minute, after application of the activatable linerless label to the item so that minor adjustments can be made to the activatable linerless label's position on the item immediately after application. Embodiments of the adhesive form a permanent bond between the activatable linerless label and the item within approximately two minutes, after activation of the activatable linerless label, so that the activatable linerless label cannot inadvertently be removed from, or repositioned on, the item.

**Adhesives**

Various activatable linerless label adhesives or adhesive systems are provided as described in greater detail herein. However, it will be appreciated that in no way is the invention limited to the use of particular adhesive systems described herein. Preferably, the adhesive systems utilize the particular adhesive base polymers described herein. The adhesive systems generally comprise (i) an adhesive base polymer, (ii) a plasticizer, and (iii) a tackifier. Typical and preferred weight percent concentrations for each of these components are set forth below in Table 1. It will be appreciated that the noted weight percent concentrations are based upon the total weight of components (i) - (iii). Thus, it is contemplated and expected that the adhesive systems may include additional components and additives in addition to components (i) - (iii) listed below in Table 1.

**TABLE 1 - Typical and Preferred Concentrations of Components in Preferred Adhesive Systems**

| Component | Typical Concentration | Preferred Concentration |
|---|---|---|
| Adhesive Polymer Base | 20% - 35% | 22% - 30% |
| Plasticizer | 50% - 75% | 58% - 70% |
| Tackifier | 5% - 20% | 6% - 15% |

The preferred adhesive systems described herein generally comprise the adhesive base polymer (described in greater detail herein), the plasticizer which preferably, is in a solid crystalline state below an application temperature, and the solid tackifier which preferably is also in a solid state below the application temperature. Physical states of an adhesive material can be switched between solid and non-solid by altering the temperature. The open time of an adhesive can be controlled by adjusting a ratio of the components, i.e. the adhesive polymer base, the plasticizer, and the tackifier. The preferred activation temperature is preferably within the range of from about 50 °C to about 120°C. However, it will be understood that the invention is not limited to adhesive systems exhibiting activation temperatures within this range.

At a switching temperature of the activatable linerless label adhesive, the properties of adhesion and viscosity markedly change. Therefore, a pressure sensitive adhesive system can be thermally switched from "off" to "on" by using these strategies described herein. If such adhesive system is then coated on the facestock at a temperature below the designed switch temperature, the adhesive material is in its non-sticky solid state. Thus, a label construction can be wound in a roll form. During the application process, the temperature is increased to the switching temperature so that the adhesive material will change to a non-solid state and then exhibit its pressure sensitive adhesive properties, which allow the activatable linerless label to be adhered to a substrate as desired as a result of increased adhesion properties. If the substrate exhibits a porous surface, the preferred embodiment adhesive systems will flow into the pores and "stick" very well, as a result of the interlocking effect even when the temperature is reduced below that of the switching temperature of the adhesive material.

The formulation shown in Table 2, illustrates one exemplary adhesive formulation wherein glyceryl tribenzoate is used both as the plasticizer and as higher percentage source of bio-based content, as well as an energy absorption agent. In this plasticizer, a glycerol component is a plant-based molecule that makes up about 22% of the glyceryl tribenzoate. Other examples of plasticizers for these types of formulations include dicyclohexyl phthalate, diphenyl phthalate and 1,4-cyclohexane dimethanol dibenzoate.

**TABLE 2 - Exemplary Adhesive Formulation**

| Adhesive Polymer Base | | Weight % Concentration |
|---|---|---|
| | Butyl Acrylate | 37.2% |
| | Styrene | 29.3% |
| | Methyl Methacrylate | 29.3% |
| | Methacrylic Acid | 1.7% |
| | Acrylic Acid | 2.5% |
| Heat-Activatable Adhesive: | | |
| | Adhesive Polymer Base | 25.5% |
| | Glyceryl Tribenzoate (Plasticizer) | 66% |
| | TACOLYN 3400 (Tackifier) | 8.5% |

As explained in greater detail herein, in forming the adhesive polymer base, it is preferred to utilize effective amounts of one or more multifunctional monomers and one or more chain transfer agents. A representative preferred multifunctional monomer is ethylene glycol dimethacrylate. A preferred chain transfer agent is n-dodecyl mercaptan.

The present invention also provides various preferred embodiment adhesive polymer bases comprising (i) one or more lower alkyl acrylates, (ii) styrene, (iii) methyl methacrylate, (iv) methacrylic acid, (v) acrylic acid, one or more multifunctional monomers, and one or more chain transfer agents. In one embodiment, typical and preferred concentrations for each of these components are set forth below in Table 3 as follows. The weight percent concentrations listed in Table 3 are based upon the total weight of the adhesive polymer base. It will be understood that the various adhesive base polymers described herein are merely representative in nature. Although generally constituting preferred embodiments of the invention, in no way is the invention limited to the use of the particular adhesive polymer bases described herein.

**TABLE 3 - Typical and Preferred Concentrations of Components in Adhesive Polymer Bases**

| Component | Typical Concentration | Preferred Concentration |
|---|---|---|
| Lower Alkyl Acrylate | 5% - 50% | 12% - 48% |
| Styrene | 20% - 85% | 23% - 78% |
| Methyl Methacrylate | 1% - 35% | 3% - 30% |
| Methacrylic Acid | 0.5% - 5% | 1% - 2% |
| Acrylic Acid | 0.5% - 5% | 1% - 3% |
| Multifunctional Monomer | 0% - 5% | 0.5% - 2.5% |
| Chain Transfer Agent | 0% - 5% | 1.0% - 4.0% |

A wide array of lower alkyl acrylates can be used singly or in combination for component (i) in the preferred embodiment adhesive polymer base. For example, methyl acrylate, butyl acrylate, ethyl acrylate, and 2-ethylhexyl acrylate could be used. However, butylate acrylate and ethyl acrylate are generally preferred with butyl acrylate being most preferred. A wide array of styrene and styrene based materials can be used for component (ii). Similarly, for component (iii), it is generally preferred that methyl methacrylate be used. However, it will be appreciated that other analogues and functionally equivalent monomers could be used in conjunction with or instead of methyl methacrylate.

The preferred monomer for component (iv) is methacrylic acid. However, it will be appreciated that the invention includes other equivalent monomers in conjunction with or instead of methacrylic acid. Although acrylic acid is noted for use as component (v), it will be understood that the invention includes use other equivalent monomers.

A wide array of multifunctional monomers or multifunctional monomer agents can be used in the present invention. The multifunctional monomers can be used to achieve cross-linking of the adhesive base polymer. Representative examples of such multifunctional monomers include, but are not limited to, difunctional monomers, trifunctional monomers, and multifunctional monomers having more than three active functional sites. Preferred examples of difunctional monomers include, but are not limited to 1,4-butanediol diacrylate, polyethylene glycol diacrylate, and combinations thereof. Another preferred difunctional monomer is ethylene glycol dimethacrylate. Preferred examples of trifunctional monomers include, but are not limited to ethoxylated trimethylolpropane triacrylate, propoxylated glycerol triacrylate, and combinations thereof. Preferred examples of multifunctional monomers having more than three active functional sites include, but are not limited to, ethoxylated pentaerythritol tetraacrylate, and combinations thereof. These and numerous other suitable multifunctional monomers are commercially available from various suppliers such as Sartome Company, Inc. of Exton, Pennsylvania. Typical concentrations of multifunctional monomers range from about 0 to about 5.0%, with from about 0.5% to about 2.5% being preferred, and from about 1.5% to about 2.0% being most preferred.

Chain transfer agents, when used in forming the activatable linerless label adhesives, are typically used at concentrations of from about 0 to about 5.0%, and preferably from about 1.0% to about 4.0% (percentages are based upon the total weight of monomer and chain transfer agent). Representative examples of suitable chain transfer agents include, but are not limited to n-dodecyl mercaptan, tert-nonyl mercaptan, isooctyl 3-mercaptopropionate, and combinations thereof. It will be understood that in no way is the invention limited to these chain transfer agents. Instead, a wide array of chain transfer agents can be used. Suitable chain transfer agents are available commercially such as from Sigma Aldrich of St. Louis, Missouri. Most preferably, the adhesive polymer bases include both (i) one or more multifunctional monomer agents and (ii) one or more chain transfer agents.

In one embodiment, a particularly preferred adhesive polymer base composition is set forth below in Table 3A.

**TABLE 3A - Preferred and Most Preferred Concentrations of Components in an Adhesive Polymer Base**

| Component | Preferred Concentration | Most Preferred Concentration |
|---|---|---|
| Butyl acrylate | 9% - 14% | 12.8% |
| Styrene | 68% - 80% | 77.6% |
| Methyl Methacrylate | 2% - 6% | 3.2% |

(continued)

| Component | Preferred Concentration | Most Preferred Concentration |
|---|---|---|
| Methacrylic Acid | 1% - 2% | 1.2% |
| Acrylic Acid | 1% - 2% | 1.7% |
| Ethylene glycol dimethacrylate | 0.5% - 2.5% | 1.5% |
| n-Dodecyl mercaptan | 1.0% - 4.0% | 1.9% |

The activatable linerless label adhesives have unique characteristics that enable them to be used in numerous applications. One feature of the activatable linerless label adhesives relates to a relatively short time period required for activating the activatable linerless label adhesive, i.e. selectively changing the activatable linerless label adhesive from a non-tacky state to a tacky state. Fast activation times enable the adhesive to be used in high speed labeling operations. Preferably, the activatable linerless label adhesives of the present invention can be activated within a time period of about 0.3 seconds and generally activated in a time period of less than 1 second, and more typically, less than 0.5 seconds. This time period is referred to herein as the adhesive's "activation time."

As previously described herein, the activatable linerless label adhesives, once activated, remain in their activated state long enough to at least allow application of a label carrying the activatable linerless label adhesive to the item or receiving substrate before the activatable linerless label adhesive loses its tackiness. For example, the activatable linerless label adhesives preferably exhibit an open time of at least from about 0.1 second to 10 minutes or longer. For certain applications, the activatable linerless label adhesives can be tailored to exhibit relatively long open times, such as up to 72 hours or longer. Typically, the activatable linerless label adhesives of the invention exhibit open times of from 10 seconds to 60 seconds.

Once the activatable linerless label adhesives are activated, i.e. while in their "open" and tacky state, the activatable linerless label adhesives exhibit relatively high tackiness. For example, the activatable linerless label adhesives exhibit an initial peak tack to the substrate such as cardboard or steel of at least about 1.0 Newton, and preferably at least about 1.25 Newtons. As described in conjunction with the examples presented herein, typically, the preferred embodiment of linerless label adhesives exhibit initial peak tack values in the range of from 1.0 Newton to 2.0 Newtons. These tack values are measured using SPAT, which is described in detail herein. Preferably, these tack values are with regard to the substrates as described herein. However, it will be appreciated that the present invention is not limited to linerless label adhesives that exhibit these tack values in association with the substrates described herein. That is, it is contemplated that the activatable linerless label adhesives exhibit these tack values in association with other substrates and substrate materials not expressly described herein. Furthermore, it is generally preferred that upon activation of the activatable linerless label adhesive, the tackifier softens and is in a flowable state.

In addition, in certain embodiments, the activatable linerless label adhesives are generally clear after activation to allow the passage of light without any detrimental absorbance. Preferably the activatable linerless label adhesives, once activated, remain in a clear or at least substantially clear state for relatively long time periods and preferably for at least 1 year, and more preferably longer than 1 year. It will also be understood that in other embodiments of the invention, the activatable linerless label adhesives may contain one or more pigments, dyes, inks, colorants or the like such as for example, carbon black or graphite. In the event that the activatable linerless label adhesive contains carbon black or graphite, typical concentrations range from about 0.01% to about 0.1% and preferably from about 0.02% to about 0.08%, based on wet weight. In certain applications, a concentration of about 0.05% of carbon block is used. A wide array of commercially available sources of carbon black may be used. Preferably, carbon black from Cabot Corporation of Boston, Massachusetts is utilized. Another preferred carbon black is available under the designation AURASPERSE W-7012, available from BASF Corporation of Florham Park, New Jersey.

The activatable linerless label adhesives can be water based or other form, in which the adhesive base polymer is blended with other adhesive components such as the solid plasticizer, and/or the solid tackifier to yield a linerless label adhesive that is heat activatable, and particularly, a light activatable adhesive such as near infrared radiation ("NIR") to Mid infrared ("IR") activatable adhesive formulation.

Additional aspects of the preferred embodiment adhesives are as follows. A typical range of average molecular weight of the adhesive base polymer is from about 10,000 Daltons to about 150,000 Daltons. A preferred range is from about 15,000 Daltons to about 100,000 Daltons, with a range of from about 20,000 Daltons to about 40,000 Daltons being most preferred. Polymers with lower molecular weight are generally preferred because such polymer can be activated faster than a corresponding base polymer having a higher molecular weight.

The adhesive base polymers also exhibit certain glass transition temperatures, Tg. Although the Tg of the base polymer depends upon pressure and temperature requirements of the process, and pressure and temperature conditions which the product may encounter, a typical Tg range is from about 20°C to about 100°C. A preferred Tg range is from about 55°C to about 80°C. And, a most preferred range for the glass transition temperature Tg of the base polymer is from 60°C to 75°C.

It is also preferred that when forming the adhesives, after melting, the plasticizer remains in a liquid or flowable form for an extended period of time. The temperatures at which the plasticizers exist in the liquid or flowable state are typically from 50°C to 120°C.

**As** a result of the particular formulation and selection of components, many of which have particular properties and characteristics, the activated preferred embodiment adhesives remain tacky in a temperature about -10°C and above. The activated preferred adhesives typically remain tacky for time periods of from about 0.1 seconds to about 2 weeks. However, it will be appreciated that the invention is not limited to these particular time periods. For example, linerless label adhesives can be formulated which remain tacky for periods longer than 2 weeks. Many of the activated preferred linerless label adhesives exhibit remarkably long open times, i.e. the period of time during which the adhesive is in a tacky state.

By controlling various factors including the molecular weight and molecular weight distribution of the base polymer, as well as the level of the multifunctional monomer of the base polymer by using a combination of multifunctional monomer and chain transfer material, a heat switchable activatable linerless label adhesive that has superior properties of fast activation, high tack, long open time, and long lasting clarity is obtained. Upon heating, the activatable linerless label adhesive behaves as a typical pressure sensitive adhesive, and the property of tack can be maintained for a prolonged period of time, which allows the adhesive material to flow or wet-out on the targeted substrate surface for enhancing the adhesion. Furthermore, the linerless label adhesive materials in this invention are inherently activatable with Near IR radiation, which leads to a short activation time for fast line speed.

The base polymers of the preferred adhesives typically exhibit a polydispersity index of from about 2.0 to about 10.0, and preferably from 2.0 to 4.0. However, it will be appreciated that the base polymers of the activatable linerless label adhesives of the invention include polymeric systems exhibiting polydispersities less than 2.0 and greater than 10.0.

**Labels, Additional Layers, Methods for Applying, and Equipment**

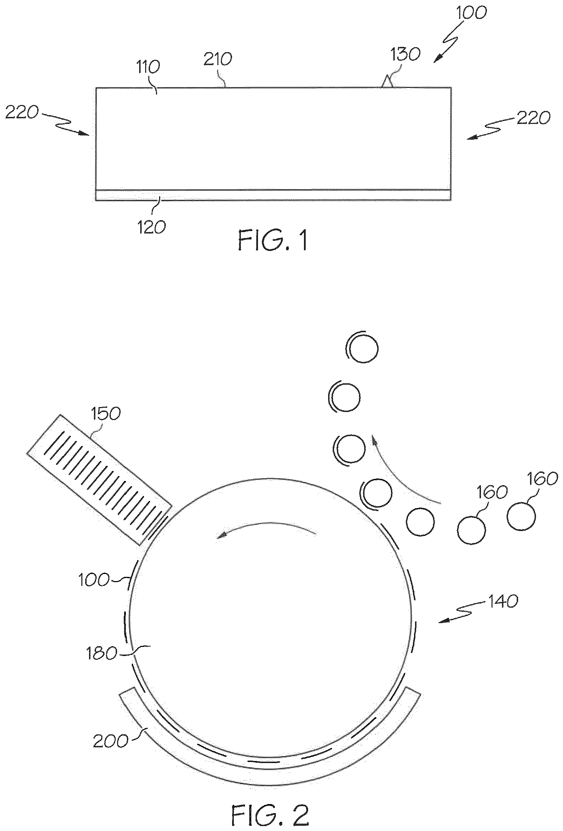

Figure 1 shows an exemplary activatable linerless label construction, or linerless label, 100 where a 10 mil facestock 110 (for example, the paper facestock used is APPLETON C1S LITHO 60 lb, by Appleton Papers Inc. of Appleton, Wisconsin) is coated with a 1 mil layer of activatable adhesive, or adhesive, 120, the formulation of which is described in Table 2. The linerless label 100 includes a face 210 and edges 220. The preparation of such linerless label 100 is detailed, for example, in U. S. Patent No. 4,745,026 to Tsukahara et al. These linerless labels 100 are typically printed with indicia 130 on the face 210 prior to activation. Indicia can include, for example, alphanumeric data/information and/or graphical images. Printing techniques are commonly known and include letterpress, laser, offset, gravure, flexographic, silk screen, and digital methods. Digital printing techniques can include, for example, ink jet, Xerographic, thermal, direct thermal, and electrographic techniques. Direct thermal printing is facilitated when the linerless label 100 includes a layer of thermally insulating primer and/or barrier material discussed herein.

To activate and apply the linerless labels 100 to the item, the linerless labels 100 are typically placed on a delivery device, or actuator. These delivery devices include blower systems (see U.S. Patent 4,784,714 to Shibata), conveyor belts (see U.S. Patent 5,895,552 to Matsuguchi), paddles (see U.S. Patent 5,922,169 to Chodacki), plungers (see U.S. Patent 6,006,808 to Ewert et al.), carrier sheets (see U.S. Patent 7,029,549 to Von Folkenhausen et al.), vacuum drums (see U.S. Patent 6,899,155 to Francke et al.), rollers (see U.S. Patent 5,964,975 to Hinton), and vacuum heads or belts (see U.S. Patent 6,471,802 to Williamson). The items to which the linerless label 100 can be applied can include, for example, boxes, parcels, envelopes, pouches, bags, vessels, containers, cans, and bottles.

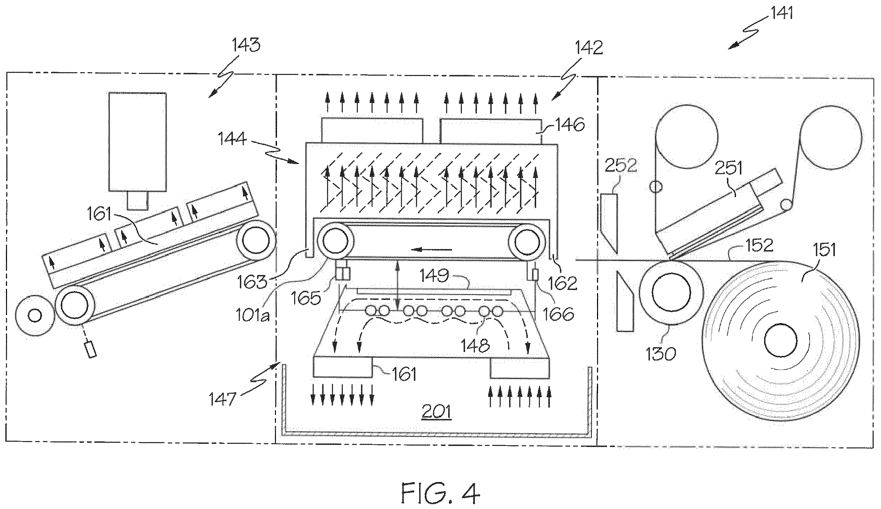

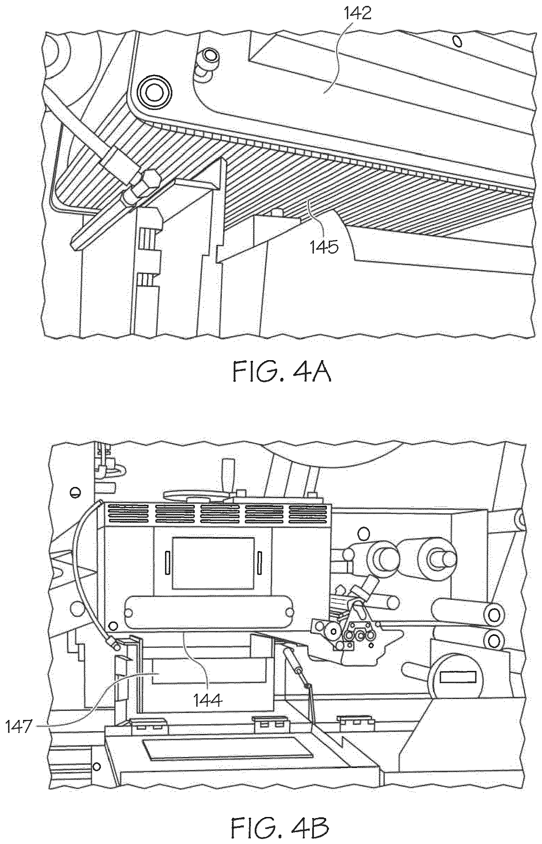

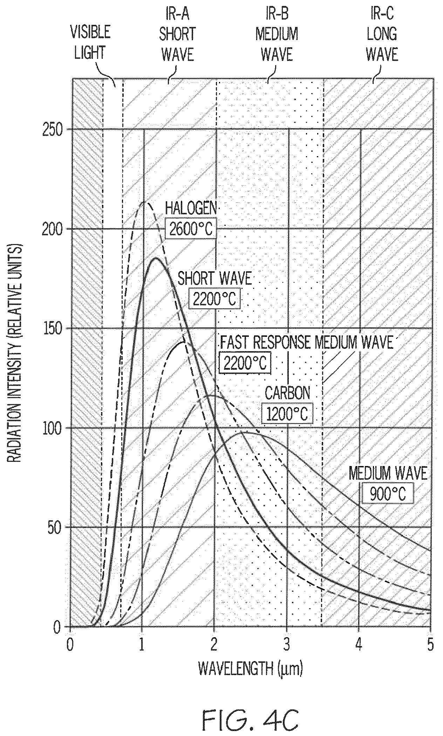

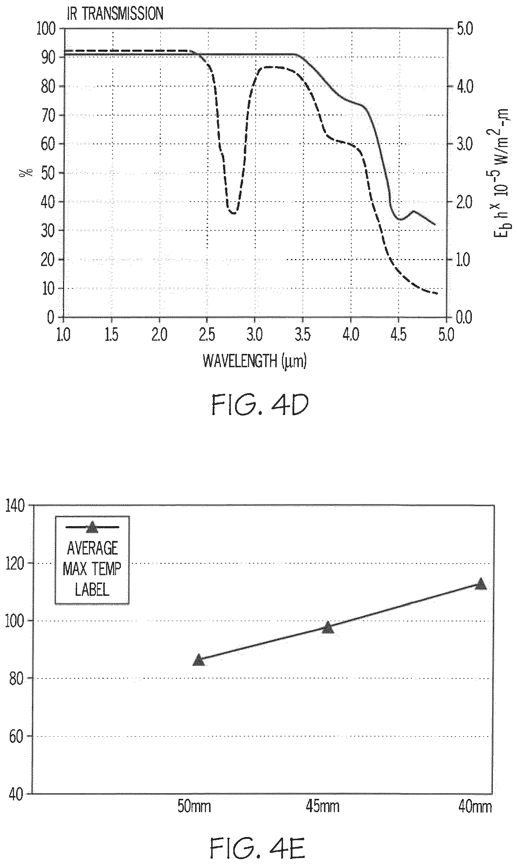

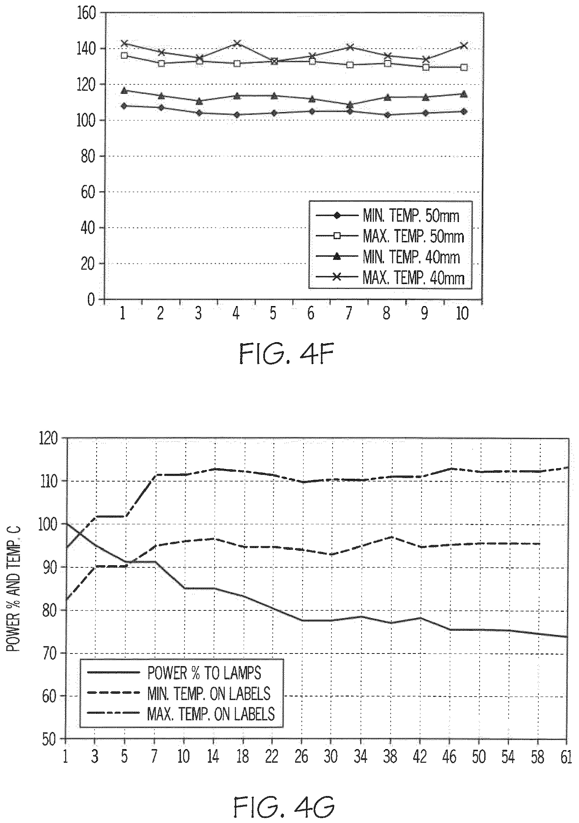

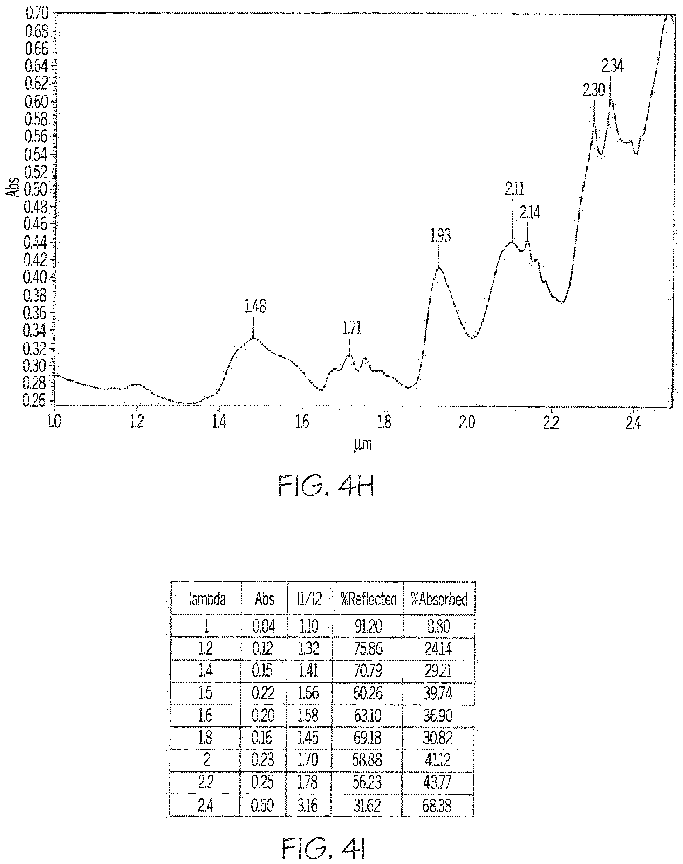

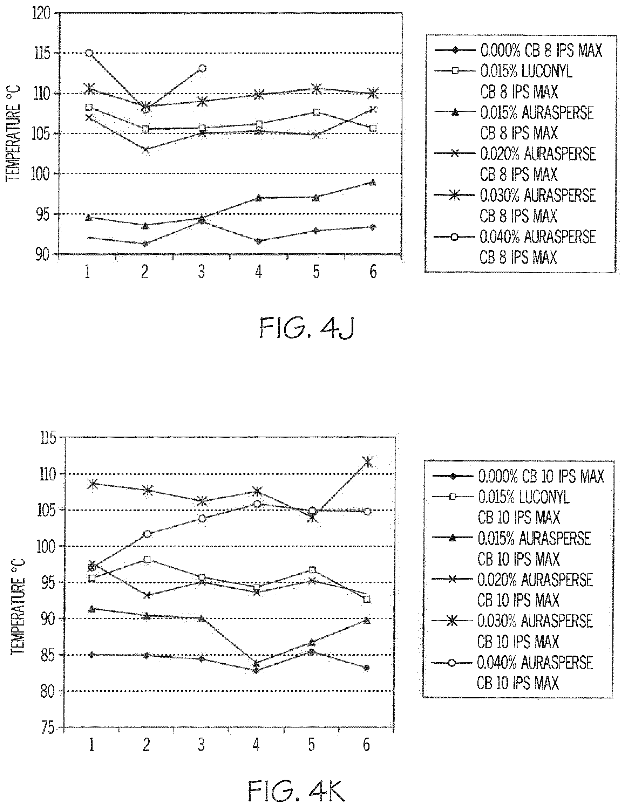

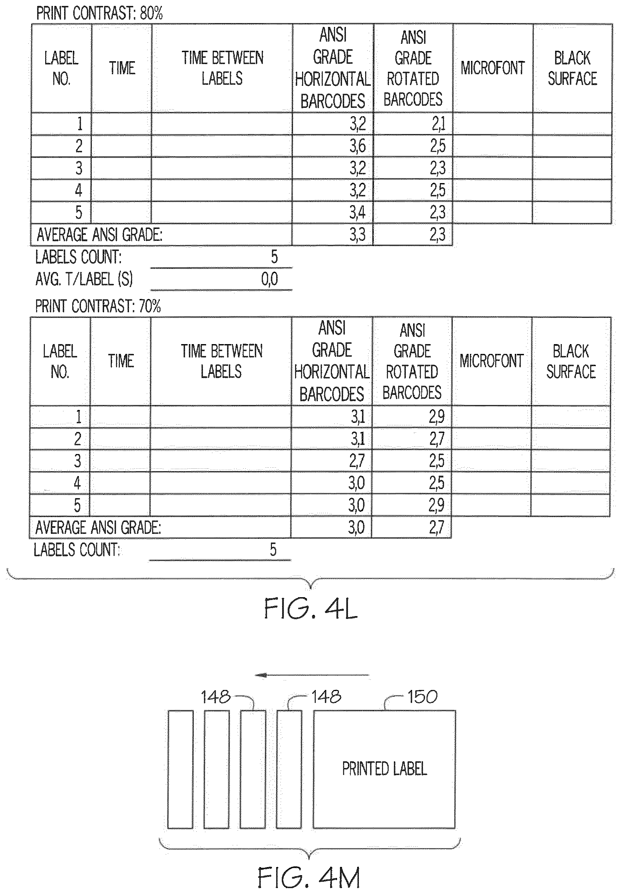

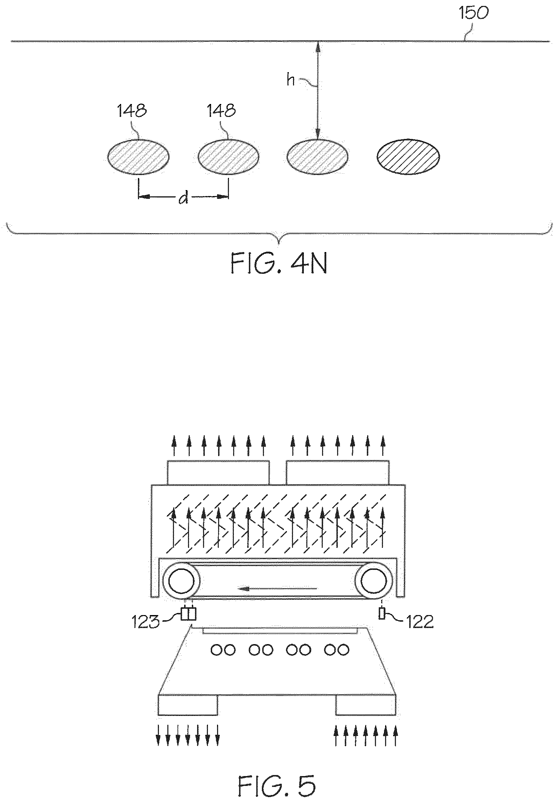

The delivery device receives the linerless label 100, then transports the linerless label 100 such that the adhesive 120 side of the linerless label 100 is exposed to an activation device, which employs an activation scheme as previously noted. In an embodiment, the activation scheme can include the exposure of the linerless label 100 to IR energy having a peak wavelength from approximately 0.8 $\mu$m to approximately 3 $\mu$m. Multiple delivery devices can be used in sequence to transport the linerless label 100 from its unactivated state to attachment to the item. For example, the delivery devices can include one or more actuators that are configured to receive the linerless label 100, transport the linerless label 100 through the radiant energy, and transport the linerless label 100 to a position where the linerless label 100 is applied to the item. In an embodiment, linerless labels 100 are activated using a ten-inch long NIR unit by Advance Photonics Technology AG of Bruckmuhl, Germany with emitters, units or lamps that each are configured to emit from approximately 200 kW/m$^2$ to 800 kW/m$^2$ irradiance delivering up to 4000 kW/m$^2$ mostly around the peak wavelength of 0.8 $\mu$m. The same activation rates in excess of 200 labels/minute were also obtained using a Short IR (SWIR) with peak wavelength of 1.2 $\mu$m, a Fast Mid Wave IR (FMWIR) with peak wavelength of 1.5 $\mu$m and a Mid Wave IR ("MWIR") unit with peak wavelength of 2.5 $\mu$m by Heraeus Noblelight GmbH of Keinostheim, Germany that include 6 to 8 twin tube emitters with short response times of less than 11 to 2 seconds. Short response times are advantageous because the units, i.e., the energy sources that are part of the activation devices, can be turned ON and OFF at a fast rate, for example, the rate of once every second or two seconds. Energy savings result from avoiding the need to leave the units ON continuously. Because of the high energy density provided by the units, the units need only be turned ON for a limited period of time to activate the adhesive 120. Depending on the dimensions of each linerless label 100, exposure times of the adhesive to the radiation can be for less than one second, and typically range from approximately 0.1 second to approximately 0.5 second. The SWIR and FMWIR are narrower than carbon types giving higher energy densities. The selection of emitter depends upon a variety of factors, and particularly is a tradeoff between high energy densities, e.g. highest absorption by the adhesive 120 and lowest absorption by the printed indicia, or controlled penetration into the structure and fastest ON/OFF cycles. Other factors especially relating to safety of using these high power emitters 148 (Fig. 4) in industrial applications need to be taken into account when designing an activation system.

Fig. 2 shows an exemplary embodiment of a first system 140 for a cut-and- stack type of label application, where a stack of precut activatable labels 150 are activated and affixed to items 160. For example, items 160 may but are not limited to containers. Each of the linerless labels 100 are picked up by a vacuum drum 180 such that the adhesive 120 (Fig. 1) is not in contact with the vacuum drum 180, and the vacuum drum 180 transports the linerless labels 100 past a radiation source 200 such as NIR or MWIR, which activates the linerless labels 100, in particular, the adhesive 120 (Fig. 1). The activated linerless labels 100 are then transported to the items 160 where they are affixed to the items 160. One advantage of such the first system 140 is that the system 140 uses pre-coated and dried adhesive 120 (Fig.1), which covers the edges 220 (Fig.1) of the linerless label 100 as evenly as other areas on the linerless labels 100. Unlike the system 140, current cut-and-stack technology uses wet applied glue, which is not always well evenly applied near a cut-and-stack edge of a cut-and-stack label. Poor alignment of the wet applied glue results in curling of the cut-and-stack edge where adhesive coverage is not constant. This curling and resulting lifting of the cut-and-stack edges is referred to as "flagging". This often results in the cut-and-stack label that, after application, does not adhere near the cut-and-stack edge, and thus, the cut-and-stack label is subject to tearing during transport and use.

Another advantage of such the first system 140 is that the system allows for short changeover times. Current cut-and-stack technology requires special glue application feet that must match the size of the cut-and-stack label, and must be adjusted to properly register with a cut-and-stack label area and not cause cut-and-stack edge bleeding of the cut-and-stack adhesive. A typical change-over time for such a process is up to eight hours. In example embodiments of the present invention, the change over-time can range from, for example, approximately one hour to approximately two hours. Accordingly, change over-time is greatly reduced.

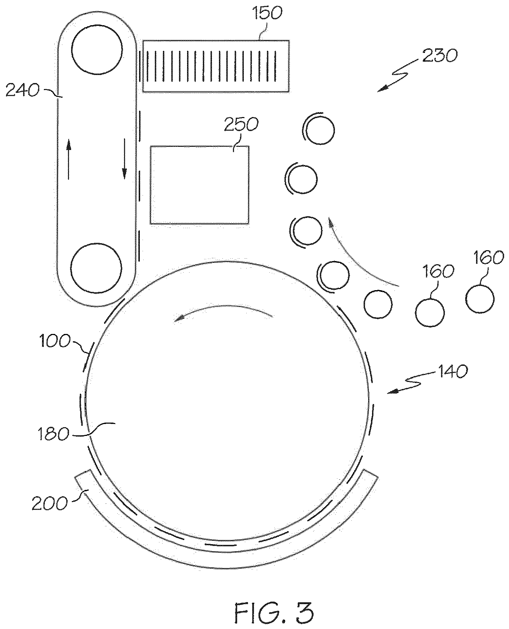

Fig. 3 shows an exemplary embodiment of a second system 230 where a stack of precut activatable labels 150 are activated and affixed to items 160. Each of the linerless labels 100 is picked up by a conveyor belt 240, such that the adhesive layer 120 (Fig. 1) is in contact with the conveyor belt 240, and each of the linerless labels 100 is transported past a printer 250, which prints indicia 130 (Fig. 1) onto the face 210 (Fig. 1) of the linerless label 100. In an embodiment, the printer 250 is configured to print images digitally. The conveyor belt 240 then transfers the linerless label 100 to the vacuum drum 180, such that the adhesive layer 120 (Fig. 1) is not in contact with the vacuum drum 180, and the vacuum drum 180 transports the linerless labels 100 past the radiation source 200, which activates the linerelss labels 100, in particular, the labels' adhesive 120 (Fig. 1). The activated labels are then transported to the items 160 where they are affixed to the items.

Fig. 3 depicts the conveyor belt 240 and the vacuum drum 180 as actuators or transporters. This embodiment is not meant to limit, but may include other actuators or transporters.

Fig. 4 shows a preferred embodiment of a third system for a print-and-apply (P&A) linerless label applicator 141, where a continuous roll of labels 151 is provided to the P&A linerless label applicator 141. The roll of labels 151 is moved on a line 152 to a printer 251 where each P&A label is printed with indicia 130 (Fig. 1) before it is cut by a cutter 252. Printed and cut P&A labels are then transferred to a thermal activation (TAM) unit, generally designated 142, typically by way of a TAM conveyor or a vacuum belt, 101a or similar component, past a NIR, Short Wave IR (SWIR) or MWIR source 201 which activates each P&A label in a fraction of a second. The activated P&A label is then transported to an applicator unit, generally designated 143, at which the activated labels are applied to products 161.

With more particular reference to the TAM unit 142, Figs. 4A and 4B illustrate in somewhat schematic fashion an upper enclosure 144 (Fig. 4) having a carrier system that carries the P&A labels (adhesive side down) through the TAM unit 142. With a door to the carrier system open, a carrier belt 145 is visible in Fig. 4A. In the preferred embodiment, the carrier belt 145 be made of metal such as stainless steel covered with by tacky coating such as a silicone layer or with sprayed low energy beads to afford roughness and heat resistance. Such coating helps maintain the P&A labels in place on the carrier belt 145 and keep their respective initial positions through the activation process. The coating also has enough low energy to minimize ink pick off and smudging of the printed P&A labels, while being heat resistant to temperatures encountered during use of the TAM unit 142. One or more fans 146 (Fig. 4) hold the P&A labels on this carrier belt 145 (Fig. 4a) with negative pressure. Such air flow has a negative impact on the activation of the P&A labels within the TAM unit 142, and this P&A linerless label applicator 141 continuously finds the best air stream as a function of the amount of heat received in the TAM unit 142 toward the P&A labels on the carrier belt 145.

Fig. 4B illustrates an emitter enclosure 147 at the bottom of the TAM unit 142 (Fig. 4). Referring back to Fig.

4, the TAM unit 142 houses one or more emitters 148 (Fig. 4), which acts as the energy source. The TAE unit 142 includes an input sensor 166 and an output sensor 165 as well as aluminum plates 162, 163.. The emitter enclosure 147 preferably is closed on top by a special quartz glass 149 that completely isolates the bottom of the TAM unit 142 from the upper enclosure 144. This causes any other source of heat not to transfer to the P&A labels for activation but only radiation energy from the emitters 148 is transferred to the P&A labels. A fan 161 such as turbo fans in this emitter enclosure 147 are monitored to keep air cool enough for the quartz glass 149 to always be in a temperature range to avoid P&A label burning in the event that the P&A label inadvertently falls on the quartz glass 149, when an unintended event occurs such as loss of power, sensor failure and so forth.

The quartz glass 149 is to be of a type that allows most of the radiation energy to pass through it, more particularly at least about 75% transmission of energy from an IR emitter, typically at least about 80%, at least about 85% or at least about 92% IR energy transmission. Suitable in this regard employs a General Electric (GE) 214 quartz glass, which has been found to provide the best results of refraction, thermal conductivity and most importantly its large IR transmission spectrum. The GE 214 glass is found to pass substantially all of the radiation energy from the emitters 148. Fig. 4C presents a spectrum of the type of emitters selected for production systems for this type of unit. Fig. 4D presents the General Electric 214 quartz glass (a low OH$^{--}$ content fused quartz) transmission of IR with comparison to another "wet" type of quartz, with the presence or absence of (water) absorption band at near 2.73 $\mu$m to 4 $\mu$m. The overall effect is an increase in the efficiency of IR heating through the GE 214 quartz glass. Comparing these illustrations, the GE 214 quartz glass transmits 90% of the IR until 3.5 $\mu$m and continues to transmit a fair amount of the IR at least until 4 $\mu$m to 4.5 $\mu$m. At these wavelengths, radiation intensity of the emitters 148 (Fig. 4) is approximately 10% of its highest intensity, consequently close to the total energy is delivered at the wavelengths smaller than 4.5 $\mu$m.

It is preferred that the emitters 148 (Fig. 4) have a particular orientation within the TAM unit 142 (Fig. 4), namely vertical or normal to the direction of the TAM conveyor 101a belt (Fig. 4) or P&A labels. This orientation achieves homogeneous radiation on the labels when they are passing through the activation system of the TAM unit 142(Fig. 4). This facilitates adjustment of the distance between emitters 148 (Fig. 4) and P&A labels in order to achieve the fastest rise in temperature without the risk of over-heating one area and under heating another, whether on different P&A labels or on the same P&A label. Figs. 4E and 4F illustrate the effect of changing distance on the label temperature. Considering safety parameters, distances between 40mm and 50mm provide the range of working distances that are adjustable by moving the emitters 148 (Fig. 4) (such as moving its enclosure) toward or away from the TAM conveyor 101a (Fig. 4).

Vertical or normal orientation of the emitters 148 (Fig. 4) to label path along the TAM conveyor 101a (Fig. 4) also provides the advantage of compensating for lamp failure. Although it is preferred to utilize long-live emitters or lamps, premature failure can occur. The vertical orientation feature permits homogeneous energy distribution and the ability of the system to ramp up the power into the remaining lamps for keeping the P&A labels adequately activated. While a warning can automatically be signaled to replace a defective lamp, this allows production to continue even in the face of lamp failure.

Preferred emitters 148 (Fig. 4) have the fastest activation rates for the P&A linerless label applicator 141 (Fig. 4), preferably taking less than one second to reach maximum temperature. Safety considerations are recognized by allowing for turn off within about the same time period. Emitter life can be enhanced by having the control logic system move the emitters 148 (Fig. 4) to only an idle state rather than fully off, such as to 10% to 15% of power. The speed of emitters 148 (Fig. 4) to turn on will define the speed and quality of label activation. Fig. 4G show how label temperature is ramped up to activation temperature almost instantaneously to keep label temperature in the vicinity of the desired temperature given by the label roll bar code into a control logic system. It will be appreciated that in very cold environments, a preheating time period may be needed, say on the order of 2 seconds, and the control logic can measure ambient temperature and if too low power up the emitters 148 (Fig. 4) as soon as it detects a box or the like on the conveyor belt 240 (Fig. 3).

Software for the control logic is designed to read the minimum and maximum temperatures on a P&A adhesive and set the power to the emitters 148 (Fig. 4) in order to achieve constant temperatures on all P&A labels to activate as needed. Fig. 4G illustrates how the power setting which started near 100% is reduced as the temperature on the P&A labels increases. The optimum temperature for the P&A adhesive material coated on the P&A labels is known, and the operational programmed controller logic will try to maintain a constant activation temperature needed for the P&A adhesive to properly activate. In Fig. 4G, the maximum temperature is obtained on the printed areas of P&A labels while the minimum temperature is on the non-printed areas. The average activation temperature in this example is approximately 100° C.

The radiation energy of the emitters 148 (Fig. 4) output is to properly match needs of label activation. This concerns emitted and absorbed energy for activation. The TAM unit 142 (Fig. 4) quickly and efficiently activates the P&A labels presented to it on the TAM conveyor 101a (Fig. 4). This is a direct function of energy density of the emitters 148 (Fig. 4) that strikes the P&A labels, the activation temperature of the P&A adhesive and how rapidly the available radiated energy is translated to rise in adhesive temperature. This is directly related to absorption of the radiated energy by the P&A adhesive, a barrier and a paper. Calculation of energy generated by the emitters 148 (Fig. 4) and received on the P&A labels' surface is governed by:

1. Efficiency of the emitters 148 (Fig. 4) and their reflectors.

2. Transmission of emitter light by the quartz glass 149 (Fig. 4), what percent of energy is converted to unwanted heat that needs to be reduced by cooling effect of the fans 161 (Fig. 4) of the emitter enclosure 147 (Fig. 4). See Figs. 4C and 4D.

3. The distance between the emitters 148 (Fig. 4) and the P&A labels and its intense influence on the rapid rise of P&A label temperature. See Figs. 4E and 4F.

4. How close the emitters 148 (Fig. 4) are to one another, especially how they are set up in relation to the direction of the P&A labels flow. Setting the emitters 148 (Fig. 4) normal to the direction of P&A label flow has the advantage of changing the distance between emitters 148 (Fig. 4) and P&A labels and better homogeneity of the radiated area on the P&A labels and its quasi-independence on the lamp-to-label distance.

5. Portion of the radiated energy that strikes the P&A label, which depends on the quality of the reflectors and the angle of reflected light, the distance between the emitters 148 (Fig. 4) and the P&A labels, and the mechanical design parameters of the TAM unit 142 (Fig. 4).

6. Exposure time during which the P&A label receives radiated energy, i.e. speed of the machine in printing, activating and applying the P&A labels.

It will be appreciated that the adhesive 120 (Fig. 1) on the linerless labels 100 (Fig. 1) requires a certain amount of heat to be rapidly converted to the activation temperature through absorption of the light by various components of the linerless label 100 (Fig. 1), namely the adhesive 120 (Fig. 1), any barrier, and the paper. As discussed herein, this absorption can be enhanced by light-absorbing additives, such as certain types of carbon black. See Figs. 4J and 4K. Fig. 4J is a plot presenting the effect of carbon black loadings activated in a thermal activation unit at an 8 inch per second parameter, and Fig. 4K is a plot presenting the effect of carbon black loadings activated in a thermal activation unit at a 10 inch per second parameter.

The following parameters contribute to high speed activation of the linerless labels 100 (Fig. 1): (a) Use of short- to mid-wavelength emitters or lamps with high efficiency filament, quartz bulb, filled gas and high reflector reflectivity; (b) emitter 148 (Fig. 4) in cross direction or normal to label flow direction; (c) selection of quartz glass 149 (Fig. 4) with wavelength transmission between 0.8 $\mu$m and 5.0 $\mu$m, e.g. GE 214 fused quartz; (d) safe minimum distance between emitters 148 (Fig. 4) and quartz glass 149 (Fig. 4) to 10 mm or less to reduce radiated energy loss; (e) safe minimum distance between quartz glass 149 (Fig. 4) and linerless labels 100 (Fig. 1) to 30 mm also to reduce radiated energy loss; and (f) maximize radiation from the emitters 148 (Fig. 4) to be received by the linerless labels 100 (Fig. 1) by minimizing radiation to unwanted components and surfaces of the machine to maximize lighted surface of the TAM conveyor 101a (Fig. 4) traveling through the TAM unit 142 (Fig. 4).

Fig. 4M provides a top view detail of the flow of the illustrated printed label 150 through the TAM unit 142 (Fig. 4) in the normal direction. Flow is right-to-left in this view, indicated by the arrow. The emitters 148 are normal to label flow. Fig. 4N illustrates distances of relevance to optimum performance. Here, the label 150 is illustrated with a flow direction out of the paper, which is not normal to the emitters 148, but parallel to them. Distance "d" is the center-to-center distance between adjacent emitters 148, and distance "h" is the height between the emitters 148 and the labels 150. Generally, h = from 1.3 to 1.8d, or 1.5 d in an especially preferred arrangement.

It is possible to calculate available energy and needed energy for high-speed activation of the labels 100 (Fig. 1). In the operational spectrum (0.8 $\mu$m to 4.5 $\mu$m), quartz glass 149 (Fig. 4) has an average absorption at the spectrum of 10% to 15%, and one can take transmission of 90%. With the quartz glass 149 (Fig. 4) at 10 mm from the emitters 148 and with radiation dissipation at an angle of 30 degrees, loss between the emitters 148 and the quartz glass 149 (Fig. 4) for a 6-inch wide machine in the absence of an enclosure, the quartz glass 149 (Fig. 4) will let pass 87% of the emitters' 148 radiated area. Two aluminum plates 162, 163 (Fig. 4) are at a machine direction ends of the quartz glass 149 (Fig. 4) to shield emitter light from irradiating the TAM conveyor 101a (Fig. 4) further downstream or upstream. With the labels 100 (Fig. 1) at 30 mm to 40 mm from the quartz glass 149 (Fig. 4), and with the lighted area 30 mm from the quartz glass 149 (Fig. 4), in a 6-inch machine 47% of the emitted light is received by the labels 100 (Fig. 1), and in a 4-inch machine 54% is received. From calculations, the TAM unit 142 (Fig. 4) operation is optimum when it minimizes all the coefficients that reduce power from the emitters 148 to reach the labels 100 (Fig. 1). Fig. 4H is a plot of absorption of label components versus wavelength. Fig. 4I presents percentage of light reflected and absorbed based on the results of NIR spectra of barrier and adhesive coated paper (Fig. 4H).

Continuing with these calculations, Figs. 4J and 4K present the effect of carbon black in getting up to 20° C degrees higher temperature by higher absorption of light. An approximation of average percentage Abs "absorbed" by the coated material and the paper between wavelengths of 1 $\mu$m to 3.5 $\mu$m is about 35% as presented on Fig. 4H. In Fig. 4H, the linerless label 100 (Fig. 1) (coated paper) containing carbon black is analyzed by FTIR using a PerkinElmer Spotlight 400 spectrometer. An integrated-sphere accessory was used to collect the spectra (10,000 - 4000 cm-1, resolution 16 cm-1), and Reflective mode was used. The Abs value of 35% (like example presented in Fig. 4I) means:

$$Abs = \log (I_{incident}/I_{reflected})$$

$$I_{absorbed} = I_{incident} - I_{reflected}$$

Abs ~= 0.35 in Fig. 4H translates to 55% of incident radiant energy is absorbed by the linerless label 100 (Fig. 1).

The radiant flux, $Q_{rl}$, received on the linerless label 100 (Fig. 1) is the fraction of the radiant flux leaving the emitters 148 (Fig. 4) and passing through air and the quartz glass 149 (Fig. 4). If $F_{1-2}$ is the radiative geometric factors between finite parallel surfaces of emitters 148 (Fig. 4) and quartz glass 149 (Fig. 4), $F_{2-3}$ the same factor between lower and upper quartz glass 149 (Fig. 4)and $F_{3-4}$ the same factor between an upper surface of quartz glass 149 (Fig. 4)and the linerless label 100 (Fig. 1), we can write the radiant flux on the linerless label 100 (Fig. 1):

$$Q_{rl} = F_{1-2} * F_{2-3} * F_{3-4} * ((\sigma * \varepsilon * A * T^4)/(1-f_c))$$

Where $\sigma$ is Stephen-Boltzmann coefficient and $\varepsilon$ the average emissivity of emitters 148 (Fig. 4) over the wavelengths. A is the area and T in Kelvin is the emitter's filaments area and temperature. $f_c$ represents lamps losses by convection and conduction. The linerless label 100 (Fig. 1) absorbs part of this energy (here about 40% to 60%) and reflects the rest. In the TAM unit 142 (Fig. 4), a linerless label 100 (Fig. 1) is kept on the belt by a negative air pressure hence subject to heat loss by convection to the upper enclosure. It also radiates to the lower temperature upper enclosure. The energy used for activation of linerless label 100 (Fig. 1) is then:

$$Q_{act} = Q_{rl} - Q_c - Q_r$$

Our calculations show that we can get up to (for full power of emitters) 1200 Watts of radiant flux at a linerless label surface. If we take the 55% absorption as previously calculated, we will have:

$$Q_{effective} = 1200 * 0.55 = 660 \text{ Watt absorbed power}$$

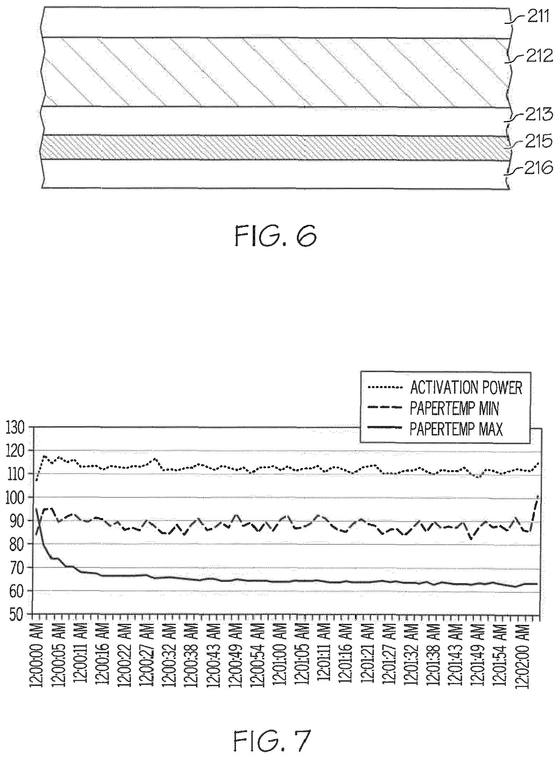

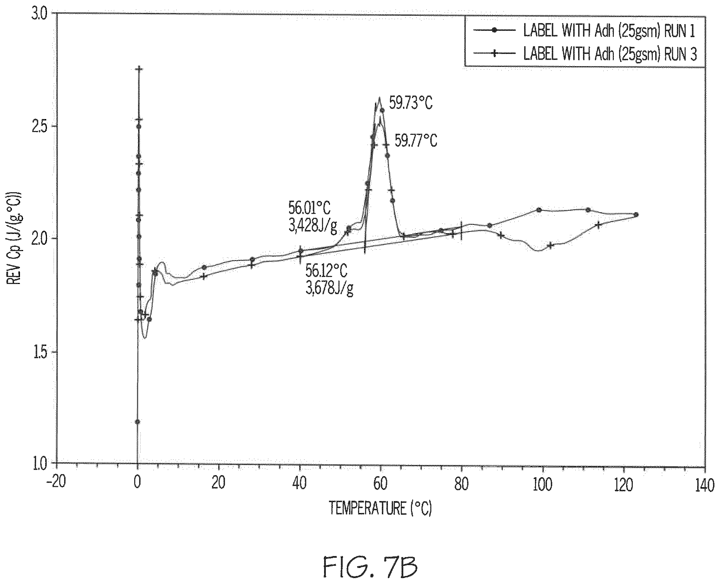

Fig. 7B represents the specific heat (Cp) of a label coated with around 5 gram per square meter (gsm) of barrier and 25 gsm of adhesive 120 (Fig. 1). The integral of the area under the curve from for example a cold start at ambient temperature $T_{amb}$ of 10c to the activation temperature $T_{act}$ of 100c. is the energy per gram needed to heat the linerless label 100 (Fig. 1) and the adhesive 120 (Fig. 1) to be activated:

$E_1 = \int Cp\, dT = 178$ J/g. As the machine heats up (and for warmer ambient temperatures) lower energies are needed and the logic software will reduce the power to the emitters 148 (Fig. 4) as seen in Fig. 4G in order to keep the same activation temperature. Q1 is consequently a highest specific heat needed for a specific linerless label 100 (Fig. 1). There are approximating 30 grams of material (adhesives and barrier) per square meter, indicating a 6 x 4 inch label has about 0.45 g coated material. Thus, an amount of energy needed to activate the adhesive 120 (Fig. 1) on the linerless label 100 (Fig. 1) is equal to or greater than: $E_1 * 0.45 = 80$ Joules

Another material that needs to heat up is the paper and is one of main absorbers of the radiant energy. A 6 by 4 inch label weight is about 0.9 g.

$$E_p = 0.9 * Cp_{paper} * (T_{act} - T_{amb})$$

In this example for $Cp_{paper}$ of around 1.3 J/g.C we will get Ep= 105 Joules.

$$E_t = E_p + E_1$$

$E_t$ (~ 185 J in this example) is the amount of energy needed to be converted to heat in the linerless label 100 (Fig. 1) in order to activate its adhesive 120 (Fig. 1).

Taking the approximation of percentage of energy absorbed by the linerless label 100 (Fig. 1) from the near to mid IR absorption results presented in Fig. 4H, then the amount of heat in Joules needed to activate each linerless label 100 (Fig. 1) can be calculated. Given the effective radiant power available (Q effective) and the amount of heat needed to activate the adhesive ($Q_t$), one can calculate the minimum exposure time of the linerless label 100 (Fig.1) to activate its adhesive using this machine under the above conditions to be:

$$t_{exp} = E_t \, (J) / Q_{effective} \, (Watts)$$

$$t_{exp} = 185/660 = 0.28 \; sec.$$

Fig.\s. 4J and 4K illustrate that the higher levels of carbon black have an intense effect on the TAM unit 142 (Fig. 4) activation output with regard to how much heat is generated from the IR emitters 148 (Fig. 4) onto the linerless label 100 (Fig. 1) at 8 inches per second and at 10 inches per second. Two different carbon black materials are illustrated, Lucronyl and Aurasperse materials. Each was coated at a 0.015% carbon black loading, and the Lucronyl material, which is currently Reach compliant for use in Europe, coating displayed a much greater efficiency of activation than did the Aurasperse material.

Fig. 4L illustrates the effect of activation temperature on printed ink of a print ribbon. The printed linerless label 100 (Fig. 1) must be of high quality to insure good bar code or the like reading when in use. It is important to prevent significant damage to the printing due to the heat, smudging and other potentially damaging events within the TAM unit 142 (Fig. 4) or its associated stations. A silicone belt and turbo fans discussed herein achieve very good maintenance of label placement and maintain low enough temperatures at the printed area so that regular thermal transfer ink ribbons can be used, while at the same time the radiant energy rapidly heats the adhesive 120 (Fig. 1) coated side up to the needed activation temperature. Fig. 4L presents print quality test results after activation and application of printed linerless labels 100 (Fig. 1).

Fig. 5 helps to illustrate a safety concept based on the condition that the linerless label 100 (Fig. 1) will not start burning if it is no longer than 2.5 seconds above the fully heated emitters 148 (Fig. 4) in the TAM unit 142 (Fig. 4). Control logic of a machine and system will switch off the emitters 148 (Fig. 4) if there is no change on one of the sensors, label outcome sensor 123 and label income sensor 122, within this timeframe. The distance "L" is the length between these sensors. The formula for maximum label length to remain safe under the operating conditions is:

$$Lmax = 2 \times L + V \times (2.5 \; sec - Tcut)$$

In the formula, L is the distance between the sensors in mm, V is the activation speed of the adhesive 120 (Fig. 1)in mm/sec, Lmax is a maximum linerless label length in mm, and Tcut is the time for cut in seconds.

A linerless laminate roll attributes discussed herein afford a unique advantage compared to current conventional thermal transfer roll labels in being able to afford certain features as follows. This has almost 60% more material length for a same size roll and more than 60% more calculated linerless labels 100 (Fig. 1) per roll than standard pressure sensitive label systems used in current conventional systems. There is a corresponding weight reduction for the same number of rolls; thus, there are more than 60% more linerless labels 100 (Fig. 1) printed and applied per roll when compared with current conventional systems. Since current pressure sensitive conventional rolls are die cut to predetermined sizes, it is estimated that 5.8% of paper wastage is saved in "trim" loss considering that the linerless laminate roll is cut to size. Also, since same are cut to size, the present linerless labels 100 (Fig. 1) can be in variable lengths without the need for roll changes on the machine. Another advantage is the absence of liner hence reduced overall change over time: the linerless laminate roll lasts 60% more and there is no liner waste roll to remove from printer.

Turning now to a printed label thermal transfer media in greater detail, an image is created by transferring colorant pixel-wise from a thermal transfer ribbon. Thermal transfer ribbons typically consists of a polyethylene terephthalate film coated with thermal transfer inks. These thermal transfer inks are in a solid phase at room temperature and transfer to the receiving layer under heat and pressure. The colorants used in the thermal transfer ribbons can be dye or pigment based. These colorants can be suspended in a thermal solvent (solvent which is solid at room temperature, but melts at higher temperature and is a good solvent for the dye, examples are high molecular waxes) or could be in a thermoplastic polymer matrix (example of polymer matrix are acrylic matrix, vinyl matrix etc).

The thermal transfer ribbon is in direct contact with the printed label thermal transfer media, this putting some special requirements on the printed label thermal transfer media. The printed label thermal transfer media needs to be very smooth to obtain intimate contact between the thermal transfer ribbon and the printed label thermal transfer media. The thermal conductivity of the printed label thermal transfer media should be such that heating is confined in a top layer of the printed label thermal transfer media. An example of one such structure is a colorant receiving layer, below which is an insulating layer with a back coating 211 (Fig. 6) of an antistatic layer. Many variants of this multilayer structure are possible, with the insulating layer being made of voided polypropylene, such as Yupo/Kimdura with Tio2 for opacity. The voided polypropylene provides the insulating behavior as well as a cushion between a rigid thermal print head and a backup roller. In an embodiment, the printed label thermal transfer media is formed by air filled glass beads in a polymer matrix, however, below this an elastic layer that is needed to provide a cushion between the rigid thermal print head and the backup roller (Fuji film). Often calendered paper is used as a media, which may or may not be coated with an ink receiving layer. The porosity of the calendered paper serves as the insulating layer.

The colorant receiving layer is formulated to provide good adhesion to the thermal transfer ink as well as provide a good clean fracture at the end of the edge 220 (Fig. 1). Some chemistry that is used for this is vinyl chloride, polyvinyl butyral, acrylic materials and polyester materials. The colorant receiving layer should also have mold release properties so that it can be released easily from a transfer tape. Some the material that can be used for this is wax or fluorine based release agent. The colorant receiving layer could also at times be a clay coating or a microporous coating where the dye or pigment be absorbed or mordanted.

A multilayer media structure can be generated by multilayer coating process or by transfer coating the colorant receiving layer onto the insulation layer and bonding the colorant receiving layer to the insulation layer using the adhesive 120 (Fig. 1), which also doubles up as a rubbery layer. The above lists some of the embodiments, used in practice, there are several other embodiments that are in use. Some of the media manufacturers are Yupo, Kimberly Clark, RICOH, IIMAX (3M), Polaroid and Appleton. Requirements for the thermal transfer ink include high cohesive strength (to prevent ink splitting), good adhesion to the colorant receiving layer and good release from the thermal transfer ribbon. The thermal transfer ink needs to show a sharp melt flow behavior in order to obtain clean transfer.

Fig. 6 illustrates the multilayer media structure. The back coating 211 provides a smooth, non-abrasive surface to the print head, which prevents a polyester based film carrier 212 from sticking to the rigid thermal print head and reduces static build up. The polyester base film carrier 212 is typically (3 to 8 $\mu$m thin) to prevent any thermal mass. A primer layer 213 is a release layer that adhere thermal transfer ink layer 215 to the PET at low temperature and allows the thermal transfer ink layer 215 to release from PET at high temperatures. Thermal transfer overcoat 216 is used to protect the thermal transfer image. This is a solid polymeric film that can be transferred pixel-wise or in its entirety using a second transfer head or using the same thermal transfer head. The thermal transfer overcoat 216 is made of primarily thermoplastic polymers, acrylic polymers, TPU etc, which provide smudge resistance and scratch resistance to an image.

In the TAM unit 142 (Fig. 4), the linerless label 100 (Fig. 1) is immediately, and while the thermal transfer ink is still wet, submitted to high activation temperatures in excess of 100°C. It is therefore important for the wax or resin used to not flow and for the TAM conveyor 101a to not allow smudging by keeping the linerless label 100 (Fig. 1) still on the TAM conveyor 101a and by cooling the print side of the linerless label 100 (Fig. 1) by an optimum air stream management. To keep the linerless label 100 (Fig. 1) on the TAM conveyor 101a, the air stream to cool a printed side must not result in a heat sink for the activation of the adhesive by emitter radiation.

Turning now to the operational logic of the machine and system, reading a bar code on the linerless laminate roll will give certain number of informational pieces to the system, for instance the activation temperature needed to set. It also gives general information on when and where the adhesive 120 (Fig. 1) is coated, from what master roll is this roll coming, what section of the master roll is this roll slit from, and so forth.

Concerning operational logic for speed increase, cardboards are tough substrates for activated adhesives, and an example is provided for box applications. An optimal sequence of print, cut, activation and application steps while the label travels through the machine is used to increase the box labeling speed to higher numbers (as shown on Fig. 7) or even higher speeds when needed. For instance, instead of waiting for the linerless label 100 (Fig. 1) to be applied on the cardboard before starting printing a next label, in this embodiment printing of the next label is started as soon as the TAM unit output sensors 165 (Fig. 4) detect an end of the linerless label 100 (Fig. 1) left the TAM unit 142 (Fig. 4). In more preferred and faster sequence, the next label starts to be printed as soon as the leading edge of the activated linerless label 100 (Fig. 1) is detected by the TAM's output sensors 165 (Fig. 4). In the preferred case while the previous label is not yet left the TAM unit 142 (Fig. 4), the next label starts to enter and to be activated. Input sensors 166 (Fig. 4) can be provided to facilitate same. With this approach, as the linerless label 100 (Fig. 1) is printed, it is forwarded into the TAM unit 142 (Fig. 4). The cutter 252 (Fig. 4) cuts the linerless label 100 (Fig. 1) from the continuous roll of labels 151 (Fig. 4) at the end of the print stage and according to the user defined length of the linerless label 100 (Fig. 1).

The following abnormal situations may happen while labeling cardboard boxes. The machine and system will respond as indicated by operation of the control logic. In one situation, a box conveyor is stopped or there is no box detected on the box conveyor. There are at least two cases to take care of:

1. The machine was waiting for a next box to come when this situation happened. The system will continue to wait for the next box to come, and it goes to its idle mode while an application sensor is watching for the next box.
2. The machine had detected the next box, started to print and activate a linerless label 100 (Fig. 1) for that box when this situation happened. The linerless label is printed 100 (Fig. 1), activated and sent to the applicator unit 143 (Fig. 4) but not applied because the application sensor did not detect the next box under the applicator unit 143 (Fig. 4). The printed linerless label 100 (Fig. 1) stays in the applicator unit 143 (Fig. 4) by negative pressure or vacuum in most cases. After the box conveyor starts running again, the box conveyor is detected by an applicator sensor, and the linerless label 100 (Fig. 1) is applied on the box. This is a case with the need for the activated adhesive 120 (Fig. 1) to keep its adhesive performance for several hours after activation.

In the event of loss of electric power, depending on what the system was doing several different responses are possible:

1. The machine was waiting for the next box and was in idle mode. It will restart after power is established. The machine will ready to work after the TAM unit 142 (Fig. 4) and the printer 251 (Fig. 4) are booted and the sensors are ready to detect the next box.

2. The machine had detected the next box and had started to print and activate when power went off. If the linerless label 100 (Fig. 1) is not yet cut, it will hang at the entrance of the TAM unit 142 (Fig. 4). After power comes back, a user has to use a printer interface to cut the linerless label 100 (Fig. 1) and take it out manually. After the power comes back, the user has to simulate the box detected by the start sensor. The control logic will direct the machine to download a previous print job that was kept in memory until the linerless label 100 (Fig. 1) is applied. After restarting a stopped job, a new label is printed, activated and applied to the box when it's detected under the applicator unit 143 (Fig. 4).

3. The machine had detected the nest box and had started to print and activate when power went off. If the linerless label 100 (Fig. 1) was already in the TAM unit 142 (Fig. 4); the linerless label 100 (Fig. 1) it is totally or partially activated. When the negative pressure keeping it on the TAM conveyor 101a (Fig. 4) went off it would fall on the quartz glass 149 (Fig. 4) and would stick to it. It is important in this case that the emitters 148 (Fig. 4) immediately shut down in response to the control logic, which would take longer if longer wavelength IR emitters 148 (Fig. 4) were used. It is also important that the quartz glass 149 (Fig. 4) is cool enough for not burning the label that lays on it, as discussed herein, such as through use of the fans 146 (Fig. 4) used to cool the emitter enclosure 147 (Fig. 4). After power comes back, the user has to simulate the next box detected by the applicator sensor. The control logic directs the machine to download the previous print job that was kept in memory until the linerless label 100 (Fig. 1) is applied. After restarting the stopped job, the new label is printed, activated and applied to the box when it is detected under the applicator unit 143 (Fig. 4).

4. Another case is when the linerless label 100 (Fig. 1) passed the TAM unit 142 (Fig. 4) toward the applicator unit 143 (Fig. 4) or in position to being applied when power goes off, shutting down the fans 146 (Fig. 4) that build the negative pressure in the applicator unit 143 (Fig. 4) to keep the linerless label 100 (Fig. 1) moving or ready to be applied. The linerless label 100 (Fig. 1) falls on the TAM conveyor 101a or on the box depending of a position of the box. After the power comes back, the user has to simulate the box detected by the applicator sensor. The control logic of the machine will download the previous print job that was kept in memory until the linerless label 100 (Fig. 1) is applied. After restarting the stopped job, the new label is printed, activated and applied to the box when it is detected under the applicator unit 143 (Fig. 4).

Concerning the control logic used to manage the system after a failed emitter, the machine detects that the failed emitter is out of order and warns the user with the general warning and an alarm on a TAM unit panel. If the system is in idle mode, it will not let it operate until the failed emitter or emitters are replaced and alarm is cleared.

If the machine is running and one emitter 148 (Fig. 4) fails, then the system sends alarms to users and reacts to keep the optimal temperature as was used before by increasing the power to the remaining emitters 148 (Fig. 4). If still the activation temperature cannot be reached (such as might be the case at cold temperature site, or under high speed labeling) then the machine warns the user to either lower the speed or replace the emitter 148 (Fig. 4). The user will decide on the next step. If decided to continue at lower speed the user will have to do all the necessary TAM conveyor adjustments. The emitter 148 (Fig. 4) has to be replaced at the earliest occasion.

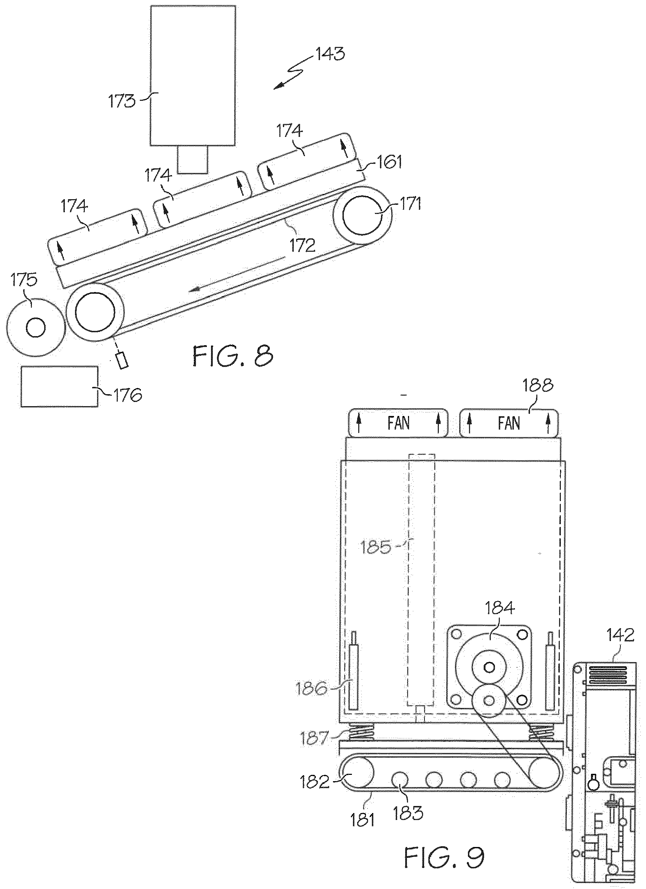

Multiple application systems can be employed as depicted as a roll-on applicator 143 in Fig. 8. A swiveling point 171 allows transport belts 172 to pivot up and down along the swiveling point 171 in response to air flow from an air cylinder 173 to swivel the applicator up or down. Fans 174 provide an air stream for supporting the linerless labels 100 (Fig. 1) while on the transport belts 172, and a resilient roller 175 presses each label onto a product 176, such as a box 176. Resilient roller 175 can be porous and can be a foam roller. The applicator unit 143 is for transporting the linerless label 100 (Fig. 1) from the TAM unit 142 (Fig. 4) to an apply position, which is a label edge below the foam roller 175. At the apply position, the roll-on applicator 143 is swiveling down to the product 176 and rolls the linerless label 100 (Fig. 1) onto the product 176. For products 176 with exactly the same height or for side labeling applications, the roll-on applicator 143 can work without the air cylinder 173.

Another application system is illustrated in Fig. 9. It is of an indirect tamp-on type with a soft belt transport system, having a soft belt, or conveyor, 181 with holes for air streaming, transport rollers 182 and support rollers 183 for constant pressure application. Before the linerless labels 100 (Fig. 1) are transported by the soft conveyor belt 181, the linerless labels 100 (Fig. 1) are activated by the TAM unit 142. The transport rollers 182 and thus the soft belt 181 are driven, such as by a stepper motor 184 that is fix mounted and gear connected in this illustrated embodiment. An air cylinder 185 has linear guiding with a given stroke length for a supply head mechanism 187 and air outcome control for quick stopping and high accuracy positioning of the labels. Touch down sensors 186 can be provided for product detection, such as industrial inductive proximity switch sensors for high dust protection. The supply head mechanism 187 can be spring loaded, which allows product angle compensation, such as +-10 degrees. Fans 188 are provided as well.

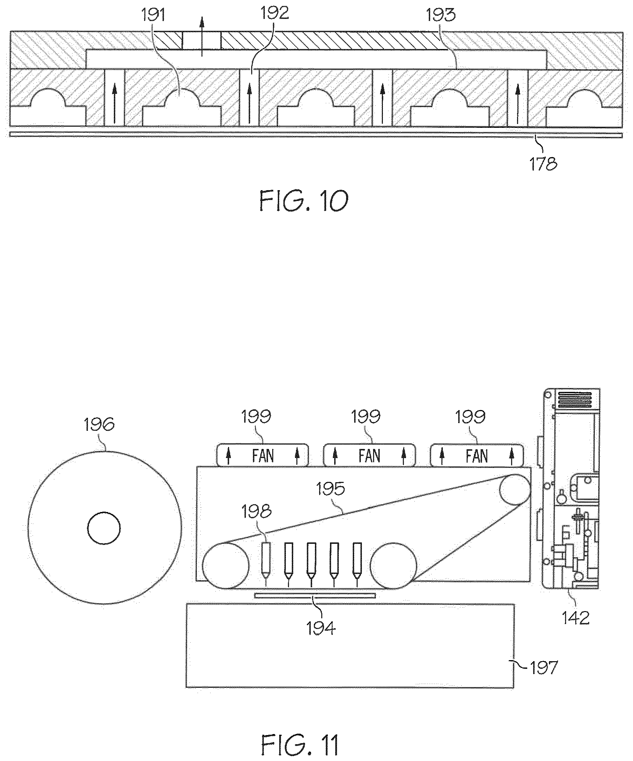

A vacuum plate can be provided instead of the soft belt 181 for the tamp-on applicator system. Fig. 10 is a cross-section through an applicator pad 193. Transport belts 191 have a special cross-section or profile such as that depicted, to be guided along the pad 193 and applicator plates. Vacuum passageways or holes 192 assist in supporting labels 178 through vacuum or low pressure provided by an injector (not shown). This type of vacuum plate is less critical in a dusty environment because there are no fans to circulate continuously dirty air through the applicator unit 143 (Fig. 8). Preferably the pad 193 is made of a good gliding plastic such as POM to reduce friction. The radius of the transport belts 191 can be smaller compared with the soft belt 181 (Fig. 9), which can be useful for smaller label formats from the TAM unit 142 (Fig. 4).

Another type of applicator can be of the blow-on variety such as shown in Fig. 11. A primary difference compared with more traditional blow-on applicators centers on transport belts 195, which forwards the activated and cut label 194 from the TAM unit 142 to an apply position. The foam roller 196 presses the linerless label 100 (Fig. 1) onto product 197, depending on the product 197 being labeled. Air nozzles 198 cooperate with fans 199 to hold the label 194 onto a belt 195 for application.

Test results show that the spectra of IR from both NIR and MWIR radiations are highly effective at coupling with the dicyclohexyl phthalate based adhesive 120 (Fig. 1); other forms of heating such as microwave, laser, inductive heating, forced air, IR, visible light energy, radiant heat energy, and UV, are also useful when used in combination with appropriately matched additives that absorb in the appropriate frequency ranges. In an example embodiment, the energy that is used to activate the adhesive 120 (Fig. 1) has the peak wavelength from approximately 0.8 $\mu$m to approximately 3.0 $\mu$m. In another example embodiment, the energy has the peak wavelength from approximately 1.25 $\mu$m to approximately 2.5 $\mu$m. The energy that is used to activate the adhesive 120 (Fig. 1) can be output from emitters 148 (Fig. 4). In one example embodiment, the emitters 148 (Fig. 4) output energy wavelengths from approximately 0.8 $\mu$m to approximately 5 $\mu$m with the peak wavelength at approximately 0.8 $\mu$m. In yet another embodiment, the emitters 148 (Fig. 4) are used to output activation energy having wavelengths from approximately 0.8 $\mu$m to approximately 5 $\mu$m with the peak wavelength at approximately 2.0 $\mu$m. In yet another embodiment, the emitters 148 (Fig. 4) are used to output activation energy having wavelengths from approximately 0.8 $\mu$m to approximately 5 $\mu$m with the peak wavelength at approximately 1.5-1.6 $\mu$m.

The systems for applying a linerless label 100 (Fig. 1) with the activatable adhesive 120 (Fig. 1) to the item 160 (Fig. 2) generally comprises the printer unit 250 (Fig. 3), the thermal activation unit 200 (Fig. 3), and the applicator unit 143 (Fig. 4). The system also preferably comprises a control system (not shown) described in greater detail herein. The printer unit 250 (Fig. 3) applies printed text, indicia 130 (Fig. 1) or other markings onto one or more labels or label assemblies. The linerless label 100 (Fig. 1) or label assemblies carry a layer of activatable adhesive 120 (Fig. 1). The printer unit 250 (Fig. 3) includes a label roll, a print roller, and a print head as schematically depicted in the Figs. The printer unit 250 (Fig. 3) may also comprise one or more ribbon sensors for detecting movement, position, and/or characteristics of the printing ribbon. The ribbon sensor ensure that no ribbon is transported into the thermal activation unit 200 (Fig. 3) with the linerless labels 100 (Fig. 1).

The preferred system also comprises a cutter 252 (Fig. 4) that cuts or otherwise forms the linerless label 100 (Fig. 1) or label assemblies into desired sizes and/or shapes. Cut or sized linerless labels 100 (Fig. 1) are then transported through the thermal activation unit 200 (Fig. 3) by a transport unit having a transport chain, conveyor or other suitable transport means. The transport unit may be coated or otherwise receive one or more protective coatings. As the linerless labels 100 (Fig. 1) are transported through the thermal activation unit 200 (Fig. 3) in the preferred arrangement, the linerless labels 100 (Fig. 1) are exposed to short wave IR radiation, such as emitted by one or more IR emitters 148 (Fig. 4). Provided proximate the outlet for heated air exiting the thermal activation unit 200 (Fig. 3), one or more lamp temperature sensor units can be provided. One or more temperature sensors may be provided in and around the area in which the linerless labels 100 (Fig. 1) are activated. For example, a first label sensor can be positioned proximate linerless labels 100 (Fig. 1) entering the activation area. A second label sensor can be positioned proximate labels exiting the activation area. These sensors review material of the incoming and outgoing linerless labels 100 (Fig. 1), particularly the material position and completeness by analyzing the edges 220 (Fig. 1) of the linerless label 100 (Fig. 1). Upon detecting recognized important differences, the control system will initiate an emergency stop. The temperature sensor may be used to analyze the temperature of the linerless labels 100 (Fig. 1) or layers thereof. Specifically, the temperature sensors are used to control the activation temperature of the linerless labels 100 (Fig. 1). A transport unit may include infrared IR shielding to prevent damage or exposure to infrared radiation by fans that generally serve to exhaust relatively hot air away from the linerless labels 100 (Fig. 1) and transport unit.

The thermal activation unit 200 (Fig. 3) also preferably comprises one or more quartz glass 149 (Fig. 4) positioned between the linerless labels 100 (Fig. 1) and the emitters 148 (Fig. 4). The quartz glass 149 (Fig. 4) prevent contact from occurring between the emitters 148 (Fig. 4) and the linerless labels 100 (Fig. 1). In one embodiment, the area or region around the quartz glass 149 (Fig. 4) is enclosed and one or more large displacement or high speed fans are used to withdraw relatively hot air from the enclosed area. The hot air surrounding the emitters 148 (Fig. 4) is thereby prevented from reaching or contacting the linerless labels 100 (Fig. 1). The use of one or more quartz glass 149 (Fig. 4) significantly increases the safety and dramatically reduces the potential for fire hazards resulting from labels igniting or burning. The use of the quartz glass 149 (Fig. 4) also serves to allow only particular wavelengths of light to pass through the plates and thereby reach the linerless labels 100 (Fig. 1). Thus, the linerless labels 100 (Fig. 1) are only heated by a portion of the spectrum of radiation from the emitters 148 (Fig. 4).

The system may include additional sensors and control provisions. For example, the system may include one or more signal interfaces between any of the printer unit 250 (Fig. 3), TAM unit 142 (Fig. 4) or applicator unit. A universal signal interface can be so positioned. A start sensor or foot switch can be used in conjunction with any of the components. The system can include a programmable logic controller (PLC) or other control system as known in the art.

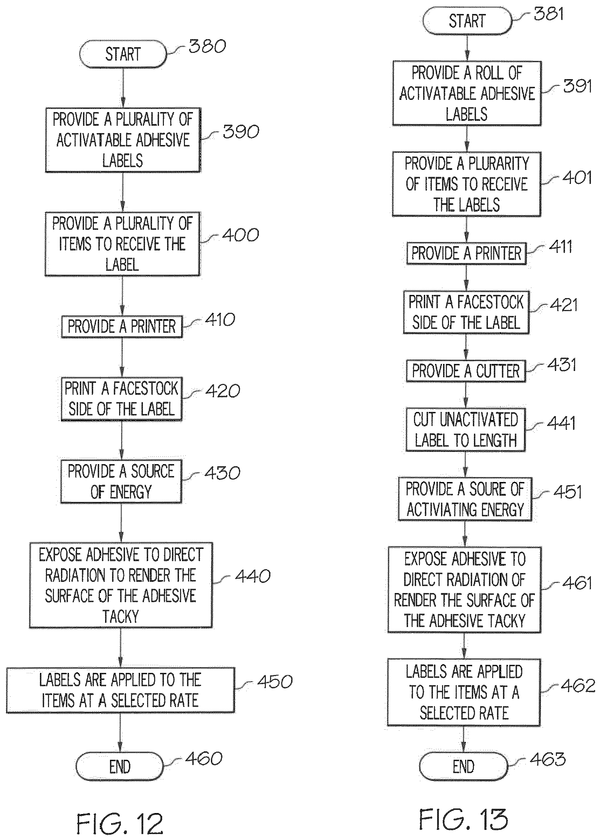

Fig. 12 shows an exemplary method of applying a linerless labels 100 (Fig. 1) with an activatable adhesive 120 (Fig. 1) to an item 160 (Fig. 2). The method starts at step 380, and then, at step 390, a plurality of linerless labels 100 (Fig. 1) with a layer of activatable adhesive 120 (Fig. 1) are provided. At step 400, a plurality of items 160 (Fig. 2) with a second surface is provided, and, at step 410, a printer 250 (Fig. 3) is provided. At step 420, the facestock 110 (Fig. 1) of the linerless label 100 (Fig. 1) is printed. At step 430, the radiation source 200 (Figs. 2-3) is provided. At step 440, the adhesive 120 (Fig. 1) on the linerless labels 100 (Fig. 1) is exposed to radiation to render the tacky surface on the adhesive 120 (Fig. 1). At step 450, the linerless label 100 (Fig. 1) is applied to the item 160 (Fig. 2) at a selected rate. The method ends at step 460.

Fig. 13 shows an exemplary method of applying a linerless labels 100 (Fig. 1) depicted with an activatable adhesive 120 (Fig. 1) to an item 160 (Fig. 2). The method starts at step 381, and then, at step 391, a 151 (Fig. 4) with a layer of activatable adhesive 120 (Fig. 1) are provided. At step 401, a plurality of items 160 (Fig. 2) with a second surface is provided, and, at step 411, the printer 250 (Fig. 3) is provided. The printer 250 (Fig. 3) can be a digital printer. At step 421, the facestock 110 (Fig. 1) of the linerless labels 100 (Fig. 1) is printed. At step 431 the cutter 252 (Fig. 4) is provided. Preferably, the cutter 252 (Fig. 4) is a laser cutting system. At step 441 the linerless labels 100 is cut to a length determined according to label size with minimization of web material waste that is not transformed into applied linerless labels 100 (Fig. 1). At step 451, the radiation source 200 is provided. At step 461, the adhesive 120 (Fig. 1) on the linerless labels 100 (Fig. 1) is exposed to radiation to render a tacky surface on the adhesive 120 (Fig. 1). At step 462, the linerless label 100 (Fig. 1) is applied to the item 160 (Fig. 2), at a selected rate. The method ends at step 463.

The above systems, machines and methods achieve rates for applying the linerless labels 100 (Fig. 1) to the item 160 (Fig. 2) at a suitable level. In other type of use of the system, for example on labeling bottles or the like, the TAM unit 142 (Fig. 4) may be longer or much longer in order to keep the same minimum exposure time with much higher linear label speeds. Examples include 60 labels per minute for print and apply machine, and approximately 500 labels per minute to upwards of approximately 1,000 labels per minute. Example rates for applying the linerless label 100 (Fig. 1) to the item 160 (Fig. 3) according to the methods of the present invention include approximately 120 labels per minute, approximately 250 labels per minute, and approximately 500 labels per minute.

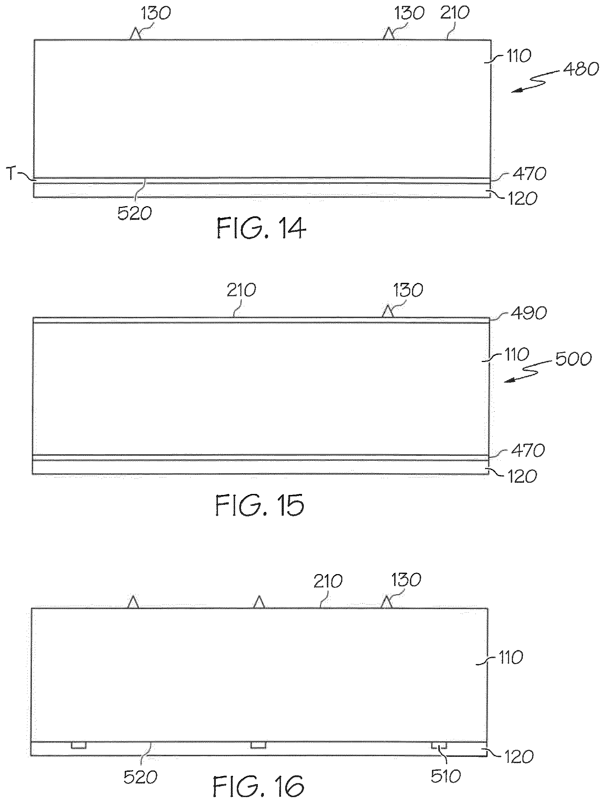

NIR energies are efficient tools for activating the adhesives 120 (Fig. 1) in a rapid manner, but may cause damage to printed area on some label substrates due to absorption of the energy by the pigments in the indicia 130 (Fig. 1) that is printed on the facestock 110 (Fig. 1) of the linerless label 100 (Fig. 1). Referring additionally to Fig. 14, to overcome this issue a reflective layer 470 is introduced into the construction of another embodiment of a label 480. The reflective layer 470 is placed between the facestock 110 and the adhesive 120. When the adhesive 120 is directly exposed to NIR energy, some of the energy is absorbed as the radiation passes through the adhesive 120. The remaining, non-absorbed energy is reflected by the reflective layer 470 and redirect back through the adhesive 120 causing additional NIR energy to be adsorbed by the adhesive 120. Hence, not only is the indicia 130 on the facestock layer 110 protected by overheating, but the redirection of the radiation by the reflective layer allows for greater absorption of the energy by the adhesive, thus, requiring less residence time by the adhesive in the presence of the radiation to obtain the desired level of exposure to the radiation. Exposures of the adhesive 120 to less than 0.3 seconds of radiation are possible with these methods using the radiation source 200, and thus, activation and application rates of greater than approximately 250 labels per minute can be obtained. Generally, it is preferred to utilize electromagnetic radiation emitters to produce the desired radiation at relatively high intensities.

Referring to Fig. 14, the reflective layer 470 can be made with any material that reflects NIR or short to mid IR energy. Suitable examples include gold, silver, aluminum and copper. Aluminum is the one of the best choices for the reflective layer 470 because aluminum is inexpensive compared with other suitable metals such as those previously listed and can easily be applied to the facestock 110 and face 210 using various metallization techniques, including, for example, vacuum metallization or coating. In addition, aluminum has greater than 95% reflectivity to the spectrum of NIR to mid IR energy. The thickness "T" of the reflective layer can be as small as one μm and still provide suitable reflectivity, which can be, for example, greater than approximately 90%. It is understood that other reflective layers can be employed for other suitable radiation sources which would also help to protect the facestock 110 from discoloration. The non-indicia bearing surface (also known as "back surface") 520 is shown.

The facestock layer 110 can be constructed from any material that is receptive to the ink that is used to print the indicia 130 on the facestock layer 110 and the face 210. Example materials for the facestock layer 110 include paper, polymer films, metalized paper, paper backed foil, and metallic foils. Referring additionally to the example embodiment illustrated in Fig. 15, these facestock materials can be treated with coatings 490 on the adhesive 120. Examples include clear top coats, which can further enhance the ability of facestock layer 110 to receive and retain the ink that is used to print/deposit the indicia 130 on the facestock layer 110. In addition, the reflective layer 470 is shown. Further examples include coatings that contain a high level of pigment, for example, titanium dioxide, which can be applied to the facestock layer 110 to increase the opacity of a label 500.

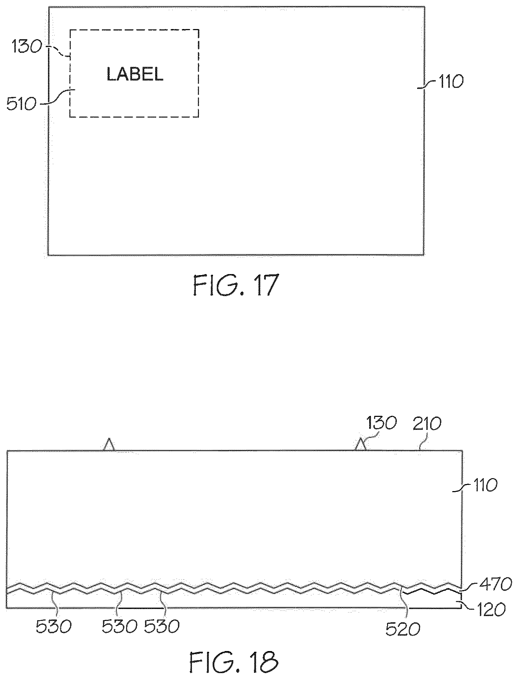

Referring additionally to the example embodiment illustrated in Fig. 16, the reflective layer 470 (Fig. 14-15) can include a reflective pattern 510 that covers partially or in totality the non-indicia bearing surface 520 of the facestock layer 110 and the face 210 over the adhesive 120. For example, referring additionally to Fig. 17, a reflective pattern 510 can be placed on the facestock layer 110 so as to overly indicia 130 on the back surface 520 (Fig. 16) of the facestock layer 110 when viewed through the adhesive 120 (Figs. 14-16). This reduces the amount of reflective material that is needed for construction of the label 500 (Fig. 15).

Referring additionally to the example embodiment illustrated in Fig. 18, while the back surface 520 of the facestock layer 110 and face 210 with the indicia 130 can be smooth, it is also possible that the back surface 520 of the facestock layer 110 and adhesive 120 can be textured. Vacuum metallization of a textured facestock layer, for example, can yield a textured reflective surface. Likewise, embossing of the smooth reflective layer 470 can yield a similar textured reflective surface. Such textured surfaces can be used to redirect radiation or improve reflection of radiation from radiation sources 200 (Figs. 2-3) that are not perfectly perpendicular to the plane of the facestock 110. For example in Fig. 18, a retroreflective microtexture 530 is shown. U.S. Patent No. 6,767,102 to Heenan et al. illustrates examples of various retroreflective surfaces. A retroreflector is a device or surface that reflects light back to its source with a minimum scattering of light. Thus, an electromagnetic wave front is reflected back along a vector that is parallel to, but opposite in direction from a wave's source.

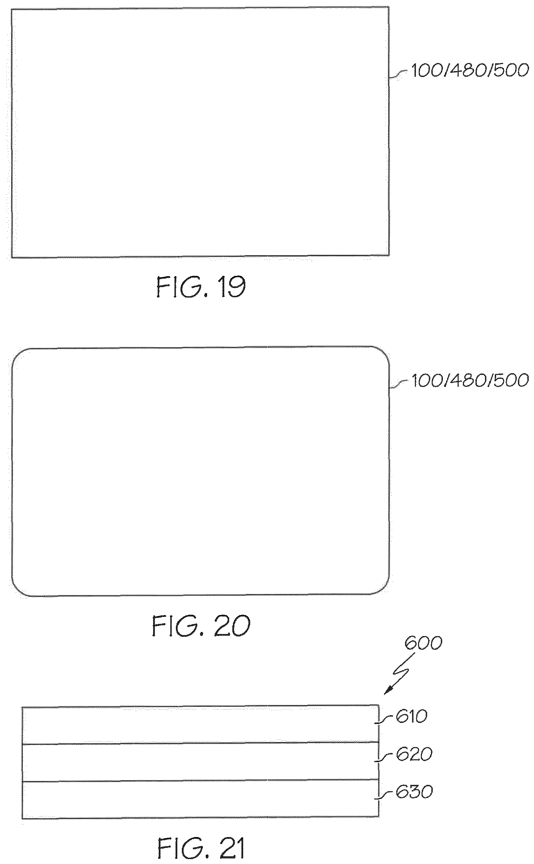

Various embodiments of the invention can have a variety of sizes and shapes. For example, referring additionally to Figs. 19 and 20, the width "W" of an exemplary rectangular label 100/480/500 can range from approximately 0.5 cm to approximately 30 cm, and the length "L" of the exemplary rectangular label 100/480/500 can range from approximately 0.5 cm to approximately 30 cm. Accordingly, the overall surface area of exemplary rectangular labels 100/480/500 can range from approximately 0.25 square cm to approximately 900 square cm. The exemplary labels 100/480/500 according to the invention can have any shape, for example, the labels 100/480/500 can be rectangular, square, circular, and other shapes including irregular shapes. Examples of various label shapes are shown in U.S. Patents 2,304,787, 2,569,140 and 2,783,172 to Avery Dennison.

The various labels and label systems described herein may further comprise one or more barrier coats or layers or primer coats or layers. Such coats or layers are beneficial during printing stages, particularly those employing direct thermal printing. Generally, a barrier coat prevents discoloration of the facestock 110 (Figs. 14-15) and print under a wide array of conditions to which the label 100/480/500 may be exposed. Preferably, the barrier coat prevents discoloration of the facestock 110 (Figs. 14-15) and print upon exposure to temperatures of from about -20°C to about 80°C, for times of up to several months or longer and preferably up to 1 year, and at humidity levels of from about 10% to 99%. Generally, such barrier coats comprise polymeric materials compatible with adhesives described herein and which include an effective concentration of styrene moieties. In certain embodiments, the adhesive 120 (Fig. 1) and the barrier layer can be coated with one pass using dual die technology.

In several of the preferred embodiment adhesive formulations, glyceryl tribenzoate is used as the plasticizer and has a peak melting temperature at 72°C, a range of 68°C-72°C. Another plasticizer is dicyclohexyl phthalate, which has a peak melting temperature at 63°C. Once the adhesive 120 (Fig.1) is activated by radiation or other energy source 200 (Figs. 2-3), the plasticizer stays in liquid form and may migrate from the adhesive 120 (Fig. 1) to its contact area. The higher the temperature, the faster the migration. Thus, the barrier layer covers an adhesive side of the label 100/480/500, seals capillaries of facestock 110 (Fig. 1) and serves as a barrier to minimize plasticizer migration from the adhesive side to the print side of the label 100/480/500. Poly(vinyl alcohol) is a very commonly used material for an oxygen permeability barrier and dye migration barrier. However, the label 100/480/500 with this poly(vinyl alcohol) layer produces a lower tack than that without this poly(vinyl alcohol) layer. From a compatibility point of view, a polymer material bearing styrene units should be more compatible. A mixture of one to one weight ratio of HYCAR 26288 and HYCAR 26315, both available from Lubrizol Corp. of Cleveland, Ohio, is an example of a preferred formulation for use as the barrier coating or layer. Both polymers include styrene moiety in their molecular backbone. A coat weight of the barrier layer also impacts the adhesive performance as well, since plasticizer will be absorbed by the barrier layer. Since plasticizer is "consumed" by the barrier layer, the higher the barrier layer coat weight, the lower an adhesive tack. The preferred barrier layer coat weight is below 12 g/m² (gsm). The most preferred coat weight is in between 2 to 10 g/m² (gsm). The barrier layer is preferably used to cover the adhesive 120 (Fig. 1) and to seal capillaries of the facestock 110 (Fig. 1). For this reason, polymeric substances having glass transition temperatures less than 80°C are preferred. The most preferred glass transition temperature is lower than 60°C.

The present invention adhesives 120 (Fig. 1) can be used in a wide range of layered arrays. Generally, such arrays include the substrate, one or more functional layers such as reflective layers and/or barrier layers, and one or more layers of the adhesive 120 (Fig. 1). Fig. 21 schematically illustrates a layered assembly 600 comprising a layer 610 of a linerless adhesive, a substrate 630, and a barrier layer 620 disposed between the adhesive layer 610 and the substrate 630. The substrate 630 is preferably a paper facestock or a transparent film substrate such as PET and BOPP, etc. As illustrated in Figure 21, the barrier material 620, which also functions as a binder layer, is coated on the substrate 630, followed by coating the adhesive 610 on the barrier layer 620 by direct coating techniques. The barrier layer 620 can be coated on the film substrate 630 by either direct coat or transfer coat techniques. In general, such adhesives 610 include materials that have relatively low melting points such as in the range of 50°C to 120°C, which includes organic materials such as plasticizers, tackifiers, and combinations. The inclusion of such relatively low melting point materials in the adhesives 610 imparts a resulting activation temperature of such adhesive 610 within this range of temperatures. Upon heating, the molecules of the solid plasticizer, and/or tackifier will be absorbed and interact with the adhesive base polymer at a molecular level to provide an either permanent or removable pressure sensitive paper or film label construction.

Additionally, the barrier layer 620 can enhance the anchorage of the adhesive 610 with a wider drying temperature range during adhesive coating process. In addition, the barrier layer 620 also serves as a guard to minimize bleeding of plasticizer from the adhesive 610 to the paper facestock. Furthermore, the barrier layer 620 can have a thickness of less than 12 μm and have the glass transition temperature lower than 80°C.

Referring to Fig. 21, the barrier layer 620 can be a polymeric material having the glass transition temperature less than 80°C and with the thickness less than 12 μm. The primer layer can be applied by traditional coating methods, such as knife coating, roll coating, and die coating.

In certain embodiments, and as described herein, carbon black or other like agent(s), are incorporated into one or more layers of the layered assembly 600 to promote activation of the adhesive 610. Generally, the incorporation of carbon black reduces energy consumption for the activation process. Reduced energy consumption may be exhibited or result in cost savings, higher processing speeds, and/or further promote "green" aspects of the technology. Moreover, incorporating carbon black in one or more layers or the layered assembly 600 enables isolation of other radiation sources 200 (Figs. 2-3) for adhesive activation. Additionally, incorporating carbon black in one or more layers of the layered assembly 600 enables the distance between the radiation source 200 (Figs. 2-3), and the labels 100/480/500 (Figs. 19-20) to be increased, thereby further promoting safety of the system.

The carbon black or other alternate mediums, when incorporated into the layered assembly 600 promote energy absorption of the material, thereby leading to improved efficiencies. The carbon black can be incorporated into any layer of the layered assembly. However, it is generally preferred that the carbon black be incorporated within the adhesive 610. However, the invention is not limited to such and includes the incorporation of carbon black in other layers in addition to or instead of the adhesive 610. For example, carbon black can be incorporated in a barrier layer 620. It is also contemplated that carbon black or other like agent(s) can be incorporated in the primer layer. If carbon black is used in the primer or barrier layer 620, it can be used at the previously noted concentrations as when incorporated in an adhesive 610. However, for many applications, it is preferred to use carbon black at higher concentrations such as about 0.1%.

It is noted that other agents can be used instead of or in addition to carbon black for promoting energy absorption. Non-limiting examples of such other agents include various organic dyes, coloring agents, and pigments; and various inorganic dyes, coloring agents, and pigments. It will be understood that a wide array of inks or other agents could be used. Moreover, combinations of any of these can be used. It is contemplated that combinations of agents can be incorporated in multiple or different layers of the layered assembly 600. For example, carbon black can be incorporated into the adhesive 610 and one or more organic and/or inorganic dyes can be incorporated in a barrier layer 620.

The concentration of the carbon black or other like agent(s) in the layer of interest can vary, so long as the concentration beneficially promotes energy absorption into that layer and an increase in temperature. For example, when incorporating carbon black into the adhesive 610 or barrier layer 620, generally the concentration is at least about 0.1%, and preferably at least about 1%. The upper limit depends on numerous factors.

**Systems**

The present invention also provides various systems using the activatable adhesives 610 (Fig. 21), and layered assemblies 600 (Fig. 21) described herein. In one preferred aspect, a system for applying printed labels 100/480/500 (Figs. 19-20) to the item 160 (Figs. 2-3) comprises an activatable label 100/480/500 (Figs. 19-20)including a layer of selectively activatable adhesive 610 (Fig. 21) that exhibits an activation time of less than 1 second, and an apparatus configured to apply the label 100/480/500 (Figs. 19-20) to the item 160 (Figs. 2-3). The apparatus includes the energy or radiation source 200 (Figs. 2-3) that is configured to emit energy, and one or more actuators that are configured to (i) receive the activatable label 100/480/500 (Figs. 19-20), (ii) transport the activatable label 100/480/500 (Figs. 19-20 through the emitted energy, and (iii) transport the activatable label 100/480/500 (Figs. 19-20 to a position at which the activatable label 100/480/500 (Figs. 19-20) is applied to the item 160 (Figs. 2-3). The activatable adhesive 610 (Fig. 21) preferably exhibits the characteristics noted herein associated with the preferred adhesives 610 (Fig. 21) such as an activation time of less than 1 second, more preferably less than 0.5 seconds, and most preferably of about 0.3 seconds or less. The adhesives 610 (Fig. 21) also preferably exhibit an open time of from about 0.1 seconds to about 72 hours, and more preferably of from about 10 seconds to 60 seconds. The adhesives 610 (Fig. 21) used in these systems also exhibit certain preferred initial tack properties as described herein.

Another preferred embodiment system comprises an activatable label 100/480/500 (Figs. 19-20) including a layer of selectively activatable adhesive 610 (Fig. 21) that upon activation, exhibits an open time of at least 72 hours, and an apparatus configured to apply the label 100/480/500 (Figs. 19-20) to the item 160 (Figs. 2-3). The apparatus includes the energy or radiation source 200 (figs. 2-3) that is configured to emit energy, and one or more actuators that are configured to (i) receive the activatable label, (ii) transport the activatable label 100/480/500 (Figs. 19-20) through the emitted energy, and (iii) transport the activatable label 100/480/500 (Figs. 19-20) to a position at which the activatable label 100/480/500 (Figs. 19-20) is applied to the item 160 (Figs. 2-3). As previously noted, the adhesives 100/480/500 (Figs. 19-20) used in this system preferably exhibit the previously noted activation times, and initial tack values.

### Uses

The adhesives 610 (Fig. 21) described herein can be used in a wide array of applications. One use is in layered arrays such as layered assemblies 600 (Fig. 21).

The various layered arrays and label assemblies 600 (Fig. 21)_ can be used in numerous applications such as for example, receiving printed indicia 130 (Fig 1), information, designs, and the like. A particularly preferred use for layered assemblies 600 (Fig. 21) as described herein is use in printers 250 (Figs. 3).

### Examples

Exemplary procedures for preparing the base polymer noted in Table 2, are as follows:

### Example 1

An emulsion adhesive polymer base is prepared by emulsion polymerization from a plurality of monomers consisting of 37.2% butyl acrylate, 29.3% styrene, 29.3% methyl methacrylate, 1.7% methacrylic acid, and 2.5% acrylic acid, based on the weight of all monomers, with 0.06% by weight of n-dodecy mercaptan added as a chain transfer agent. A one-liter, jacketed, cylindrical reaction flask equipped with a four-neck flask head was fitted with a steel stirring rod with multiple steel blades, a reflux condenser, a thermometer, and a nitrogen inlet tube. The stirring speed is set at approximately 126 rpm, and the reaction temperature was set at 80°C. A reactor pre-charged solution is made by dissolving 1.0 g of HITENOL BC-10(Dai-Ichi Kogyo Seiyaku Co., Ltd. of Kyoto, Japan) surfactant in 100 g deionized water. A pre-emulsion feed soap solution is formed by dissolving 2.0 g HITENOL BC-10 and 105 g deionized water. A monomer mix is made up with 140 g of n-butyl acrylate, 110 g styrene, 110 g of methyl methacrylate, 6.5 g of methacrylic acid, 9.1 g of acrylic acid, and 0.24 g of n-dodecyl mercaptan. The monomer mix is added to the pre-emulsion solution under stirring for 10 min. An initiator solution A is prepared by dissolving 0.75 g potassium persulfate in 67 g of deionized water; solution B is made by dissolving 0.5 g of potassium persulfate in 67g of deionized water. A kickoff initiator solution is prepared by dissolving 0.75 g of potassium persulfate in 38 g of water. The reactor pre-charged solution is introduced to the glass reactor, which has been flushed with nitrogen. The kickoff initiator solution is added when the solution temperature reached 80°C. After 5 minutes, 20 g of the pre-emulsion solution was introduced into the reactor. Upon observing polymerization, the pre-emulsion solution and initiator solution A are started. Initiator solution B is fed at the end of solution A. The pre-emulsion solution feed is completed in a 4 hour period, and the initiator solution A and B feeds are completed in 4 hours and 15 minutes. Polymerization continues for another 30 minutes after completion of the initiator solution B feed. The polymerization temperature is maintained at 80°C during the polymerization. Polymerization of the monomer mixture yields a polymer latex, which can be formulated further for linerless adhesives, and which can be coated on the desired substrates.

**Example 2**

The same polymerization procedure that is used in Example 1 is used, except that the monomers used for the polymerization are used in the following weight percentages. 48.0% butyl acrylate, 23.9% styrene, 23.9% methyl methacrylate, 1.7% methacrylic acid, and 2.5% acrylic acid.

Preparation of an exemplary white heat-activated adhesive is as follows. A switchable adhesive formulation is prepared from the noted adhesive polymer base by blending with a selected plasticizer and tackifier at room temperature for enough time to ensure a homogenous composition. Typically, the preferred melting point of such solid plasticizer is above 40°C. In this example, ground plasticizer dicyclohexyl phthalate or U250M supplied by Unitex Corp. of Greensboro, NC is used. The melting point of U250M is in the range of 63°C to 65°C. The exemplary tackifier is TACOLYN 3400 (softening point 92°C) which is a resin dispersion by Eastman Chemical Company of Kingsport, Tennessee. TACOLYN 3400 is a resin ester dispersion. More specifically, TACOLYN 3400 is an aqueous, 55% solids, solvent-free anionic rosin ester dispersion prepared from a highly hydrogenated, high softening point resin. Not to be held to any particular theory, it is believed that when the white heat-activated adhesive is irradiated, the selected plasticizer is melted. The small plasticizer molecules are able to slip in between the adhesive base polymer chains to function as a "lubricant", even after the polymer cools. As a result, the free volume of the polymer is increased, or the glass transition temperature ($T_g$) of the adhesive polymer base is lowered, which leads to highly flexible adhesive coating. Advantageously, in certain exemplary embodiments, the adhesive does not include carbon black, graphite, ink(s), dye(s), pigment(s), and/or colorant(s). However, other exemplary embodiments of the adhesive include the use of such agents.

**Example 3**

An emulsion adhesive polymer base is prepared by emulsion polymerization from plurality of monomers consisting of 13.15% of butyl acrylate, 75.16% of styrene, 0.12% of methyl acrylate, 1.30% of merthacrylic acid, 1.64% of acrylic acid, 3.67% of methyl methacrylate, 1.01% of SR 206 (Sartomer Company Inc., Exton, Pennsylvania) and 0.50% of SR 306 (Sartomer Company Inc., Exton, Pennsylvania), based on the weight of all monomer and chain transfer agent, with 3.45% by weight of n-dodecyl mercaptan added as a chain transfer agent.

A one-liter, jacketed, cylindrical reaction flask equipped with a four-neck flask head was fitted with a steel rod with multiple blades, a reflux condenser, a thermometer, and a nitrogen inlet tube. The stirring rate is set at approximately 126 rpm.

A reactor pre-charge solution is made by dissolving 2.00 g of Disponil FES-77 (Cognis Corp., Cincinnati, Ohio), 0.60 g of Surfynol 485 (Air Products and Chemicals, Inc., Allentown, Pennsylvania) and 0.01 g of Drewplus L-198 (Ashland, Columbus, Ohio) in 166.30 g of deionized water.

A pre-emulsion feed soap solution is formed by dissolving 16.30 g of Disponil FES-77, 5.85 g of Surfynol 485 and 2.94 g of Aerosol OT-75and 0.01 g of Drewplus L-198 in 200.00 g of deionized water. A monomer mix is made up with 67.33 g of butyl acrylate, 0.60 of methyl acrylate, 384.84 g of styrene, 18.78 g of methyl methacrylate, 6.66 g of methacrylic acid, 8.39 g of acrylic acid, 2.57 g of SR-306, 5.17 g of SR-206 and 17.68 g of n-dodecyl mercaptan.

The monomer mix is added to the pre-emulsion solution under stirring for 10 minutes to form a white milky emulsion. An initiator is prepared by dissolving 1.34 g of potassium persulfate in 64.66 g of deionized water. A kickoff solution is prepared by dissolving 1.13 g of potassium persulfate in 30 g of deionized water. The reactor pre-charge solution is introduced to the reactor which has been flushed with nitrogen.

The kickoff initiator solution is added to the reactor when the solution reached 78°C and the reaction temperature is raised to 86°C. After 2 minutes, the pre-emulsion solution is introduced to the reactor and is completed in 240 minutes. After 45 minutes from starting of adding the pre-emulsion solution, the initiator solution is added to the reactor and is completed in 210 minutes. At this point 2.25 g of 19% ammonia water is added to the reactor. After 45 minutes, the temperature of the reactor is lowered to 75°C. Another 2.25 g of 19% ammonia water, 0.6 g of t-butyl hydrogen peroxide and 0.2 g of sodium hydroxymethanesulfinate are added to the reactor. The temperature of the reactor is further lowered to 35°C. To the resulting mixture, 0.2 g of Drewplus L-198, 0.05 g of Acticide GA (Thor Specialties Inc., Trumbull, Connecticut) and 2.23 g of deionized water are added. By the this procedure, a polymer latex is obtained in around 50.5% solids content and in pH around 6.5 to 7.0 and is ready to be used for adhesive formulation.

**Example 4**

An emulsion-based adhesive system "A" was prepared by using the acrylic emulsion based polymer formed in Example 3. Specifically, the adhesive system was formed as set forth in Table 7.

**TABLE 4 - Adhesive System "A"**

| Component | Parts by Dry Weight |
|---|---|
| Polymer of Example 3 (Adhesive Polymer Base) | 25.5 |
| UNIPLEX 260 glyceryl tribenzoate dispersion (Plasticizer) | 66. |
| Super Ester E-650 dispersion (Tackifier) | 8.5 |
| Total | 100. |

Specifically, the adhesive system is prepared by combining 25.5 parts by weight of the polymer produced in Example 3 with 66 parts by weight of UNIPLEX 260 dispersion and 8.5 parts by weight of Super Ester E-650 dispersion (Tackifier) (Arakawa Chemical of Osaka, Japan). The UNIPLEX 260 dispersion was prepared by milling UNIPLEX 260, water, dispersant and defoamer, and serves as the plasticizer. And the Super Ester E-650 component serves as the tackifier.

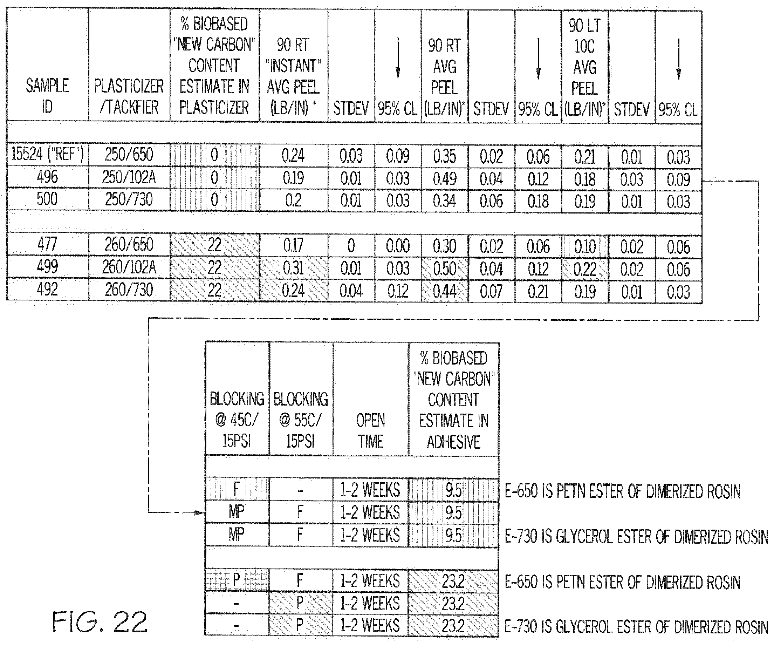

This emulsion based adhesive is stable, can be directly coated onto papers or films and dried in an air-circulated oven up to 56°C for 15 minutes without any sign of activation. The dried adhesive shows very good anchorage to primed or unprimed papers and film and passes blocking test at 45°C under 15 pounds per square inch (psi) pressure (about 103,421 Newton/m$^2$) but did not pass the blocking test at 55$\underline{o}$C under 15 psi pressure. Peel strength test data were mixed, and this formulation gives an estimated 23.2% biobased "new carbon" content in the adhesive. Further details are found in the discussion herein relating to Figure 22.

This type of adhesive exhibits excellent tack and good adhesion to non-polar surfaces and cardboards as well as remains very tacky greater than 48 hours and clear for a long period of time after activation under one or more IR emitters for 5 to 10 seconds.

**Example 5**

An emulsion-based adhesive system "B" was prepared by using the acrylic emulsion based polymer formed in Example 3. Specifically, the adhesive system was formed as set forth in Table 8.

**TABLE 5 - Adhesive System "B"**

| Component | Parts by Dry Weight |
|---|---|
| Polymer of Example 3 (Adhesive Polymer Base) | 25.5 |
| UNIPLEX 260 glyceryl tribenzoate dispersion (Plasticizer) | 66. |
| Tamanol E-102A (Tackifier) | 8.5 |
| Total | 100. |

Specifically, the adhesive system is prepared by combining 25.5 parts by weight of the polymer produced in Example 3 with 66 parts by weight of UNIPLEX 260 dispersion and 8.5 parts by weight of Tamanol E-102A dispersion available from Arakawa Chemical of Osaka, Japan. The UNIPLEX 260 dispersion was prepared by milling UNIPLEX 260, water, dispersant and defoamer, and serves as the plasticizer. And the Tamanol E-102A component serves as the tackifier.

This emulsion based adhesive is stable, can be directly coated onto papers or films and dried in an air-circulated oven up to 56°C for 15 minutes without any sign of activation. The dried adhesive shows very good anchorage to primed or unprimed papers and film and passes blocking test at 55°C under 15 psi pressure (about 103,421 Newton/m$^2$). Peel strength test data were very good, and this formulation gives an estimated 23.2% biobased "new carbon" content in the adhesive. Further details are found in the discussion herein relating to Fig. 22.

This type of adhesive exhibits excellent tack and good adhesion to non-polar surfaces and cardboards as well as remains very tacky greater than 48 hours and clear for a long period of time after activation under one or more IR emitters for 5 to 10 seconds.

**Example 6**

An emulsion-based adhesive system "C" was prepared by using the acrylic emulsion based polymer formed in Example 3. Specifically, the adhesive system was formed as set forth in Table 9.

**TABLE 6 - Adhesive System "C"**

| Component | Parts by Dry Weight |
|---|---|
| Polymer of Example 3 (Adhesive Polymer Base) | 25.5 |
| UNIPLEX 260 glyceryl tribenzoate dispersion (Plasticizer) | 66. |
| Super Ester E-730 dispersion (Tackifier) | 8.5 |
| Total | 100. |

Specifically, the adhesive system is prepared by combining 25.5 parts by weight of the polymer produced in Example 3 with 66 parts by weight of UNIPLEX 260 dispersion and 8.5 parts by weight of Super Ester E-730 dispersion available from Arakawa Chemical of Osaka, Japan. The UNIPLEX 260 dispersion was prepared by milling UNIPLEX 260, water, dispersant and defoamer, and serves as the plasticizer. And the Super Ester E-730 component serves as the tackifier.

This emulsion based adhesive is stable, can be directly coated onto papers or films and dried in an air-circulated oven up to 56°C for 15 minutes without any sign of activation. The dried adhesive shows very good anchorage to primed or unprimed papers and film and passes blocking test at 55°C under 15 psi pressure (about 103,421 Newton/m$^2$). Peel strength test data were very good, and this formulation gives an estimated 23.2% biobased "new carbon" content in the adhesive. Further details are found in the discussion herein relating to Fig. 22.

This type of adhesive exhibits excellent tack and good adhesion to non-polar surfaces and cardboards as well as remains very tacky greater than 48 hours and clear for a long period of time after activation under one or more IR emitters 148 (Fig. 4) for 5 to 10 seconds.

**Example 7**

An emulsion-based adhesive system "D" was prepared by using the acrylic emulsion based polymer formed in Example 3. Specifically, the adhesive system was formed as set forth in Table 10.

**TABLE 7 - Adhesive System "D"**

| Component | Parts by Dry Weight |
|---|---|
| Polymer of Example 3 (Adhesive Polymer Base) | 25.5 |
| UNIPLEX 250 dicyclohexyl phthalate dispersion (Plasticizer) | 66. |
| Super Ester E-650 dispersion (Tackifier) | 8.5 |
| Total | 100.00 |

Specifically, the adhesive system is prepared by combining 25.5 parts by weight of the polymer produced in Example 3 with 66 parts by weight of UNIPLEX 250 dispersion and 8.5 parts by weight of Super Ester E-650 dispersion available from Arakawa Chemical of Osaka, Japan. The UNIPLEX 250 dispersion was prepared by milling UNIPLEX 250, water, dispersant and defoamer, and serves as the plasticizer. And, the Super Ester E-650 component serves as the tackifier.

This emulsion based adhesive is stable, can be directly coated onto papers or films and dried in an air-circulated oven up to 56°C for 15 minutes without any sign of activation. The dried adhesive shows very good anchorage to primed or unprimed papers and film and did not pass the blocking test at 45°C under 15 psi pressure (about 103,421 Newton/m$^2$). Peel strength test results were reasonable but not exceptional. This formulation gives a biobased "new carbon" content estimate of 9.5% in the adhesive. Further details are found in the discussion herein regarding Fig. 22.

This type of adhesive exhibits excellent tack and good adhesion to non-polar surfaces and cardboards as well as remains very tacky greater than 48 hours and clear for a long period of time after activation under one or more IR emitters 148 (Fig. 4) for 5 to 10 seconds.

**Example 8**

An emulsion-based adhesive system "E" was prepared by using the acrylic emulsion based polymer formed in Example 3. Specifically, the adhesive system was formed as set forth in Table 11.

**TABLE 8 - Adhesive System "E"**

| Component | Parts by Dry Weight |
|---|---|
| Polymer of Example 3 (Adhesive Polymer Base) | 25.5 |
| UNIPLEX 250 dicyclohexyl phthalate dispersion (Plasticizer) | 66. |
| Tamanol E-102A dispersion (Tackifier) | 8.5 |
| Total | 100.00 |

Specifically, the adhesive system is prepared by combining 25.5 parts by weight of the polymer produced in Example 3 with 66 parts by weight of UNIPLEX 250 dispersion and 8.5 parts by weight of Tamanol E-102A dispersion available from Arakawa Chemical of Osaka, Japan. The UNIPLEX 250 dispersion was prepared by milling UNIPLEX 250, water, dispersant and defoamer, and serves as the plasticizer. And, the Tamanol E-102A component serves as the tackifier.

This emulsion based adhesive is stable, can be directly coated onto papers or films and dried in an air-circulated oven up to 56°C for 15 minutes without any sign of activation. The dried adhesive shows very good anchorage to primed or unprimed papers and film and marginally passed the blocking test at 45°C under 15 psi pressure (about 103,421 Newton/m$^2$) but did not pass the blocking test at 55°C under 15 psi pressure. Peel strength test results were reasonable but not exceptional. This formulation gives a biobased "new carbon" content estimate of 9.5% in the adhesive. Further details are found in the discussion herein regarding Fig. 22.

This type of adhesive exhibits excellent tack and good adhesion to non-polar surfaces and cardboards as well as remains very tacky greater than 48 hours and clear for long period of time after activation under one or more IR emitters 148 (Fig. 4) for 5 to 10 seconds.

**Example 9**

An emulsion-based adhesive system "F" was prepared by using the acrylic emulsion based polymer formed in Example 3. Specifically, the adhesive system was formed as set forth in Table 12.

**TABLE 9 - Adhesive System "F"**

| Component | Parts by Dry Weight |
|---|---|
| Polymer of Example 3 (Adhesive Polymer Base) | 25.5 |
| UNIPLEX 250 dicyclohexyl phthalate dispersion (Plasticizer) | 66. |
| Super Ester E-730 dispersion (Tackifier) | 8.5 |
| Total | 100.00 |

Specifically, the adhesive system is prepared by combining 25.5 parts by weight of the polymer produced in Example 3 with 66 parts by weight of UNIPLEX 250 dispersion and 8.5 parts by weight of Super Ester E-730 dispersion available from Arakawa Chemical of Osaka, Japan. The UNIPLEX 250 dispersion was prepared by milling UNIPLEX 250, water, dispersant and defoamer, and serves as the plasticizer. And, the Super Ester E-730 component serves as the tackifier.

This emulsion based adhesive is stable, can be directly coated onto papers or films and dried in an air-circulated oven up to 56°C for 15 minutes without any sign of activation. The dried adhesive shows very good anchorage to primed or unprimed papers and film and marginally passed the blocking test at 45°C under 15 psi pressure (about 103,421 Newton/m$^2$) but did not pass the blocking test at 55°C under 15 psi pressure. Peel strength test results were reasonable but not exceptional. This formulation gives a biobased "new carbon" content estimate of 9.5% in the adhesive system. Further details are found in the discussion herein regarding Fig. 22.

This type of adhesive exhibits excellent tack and good adhesion to non-polar surfaces and cardboards as well as remains very tacky greater than 48 hours and clear for a long period of time after activation under one or more IR emitters 148 (Fig. 4) for 5 to 10 seconds.

**Example 10**

The adhesive samples of Examples 4 through 9 are NIR to MWIR radiation activatable. Blocking and peel adhesion tests were performed and statistically analyzed, and the results are listed in the table of Fig. 22. Each Adhesive Formulation was coated at dry weight of 25 gsm by a Meyer rod on a vellum paper which was coated with 6 gsm of Hycar P/B coating with 0.015% of carbon black. The Hycar P/B coating is composed of one to one ratio of Hycar 26288 and Hycar 26315. Both Hycar emulsion are available from Lubrizol Advanced Materials, Inc., Cleveland, Ohio. The adhesive coatings were dried at 60°C for 5 minutes for samples using Uniplex 260 and were dried at 53°C for 5 minutes for samples using Uniplex 250. The samples were activated by a lab IR emitters 148 (Fig. 4) and adhered to Smurfit cardboard using a 500 g roller. Peel adhesion was performed on Instron 5442 at peel speed of 12 inches per minute. Further details as to procedures and practices for measuring adhesive characteristics of via 90° peel tests and blocking tests are as follows:

**Peel Adhesion Testing:**

The adhesive was coated at an approximate coat weight in the specified range of 20 gsm to 40 gsm onto the selected paper facestock. A barrier coating is coated on the paper if needed. The coated materials are dried at 50°C for 10 minutes. The resulting construction was die-cut into 25 x 204 mm (1 x 8 inch) sized strips. The strips were then subjected to an activation thermally via MidWave IR, and applied centered along the lengthwise direction to 50 x 152 mm (2 x 6 inch) brightly annealed, highly polished stainless steel test panels, or a paper cardboard, and rolled down using a 2 kg (4.5 lb), 65 shore "A" rubber-faced roller, rolling back and forth once, at a rate of 30 cm/min (12 in/min). The samples were conditioned for either 20 minutes or 24 hours in a controlled environment testing room maintained at 23°C (73°F) and 50% relative humidity. After conditioning, the test strips were peeled away from the test panel in an Instron Universal Tester according to a modified version of the standard tape method Pressure-Sensitive Tape Council, PSTC-1 (rev. 1992), Peel Adhesion for Single Coated Tapes 180° Angle, where the peel angle was either 180° or 90°, i.e., perpendicular to the surface of the panel, at a rate of 30 cm/min (12 in/min). A force to remove the adhesive test strip from the test panel was measured in lbs/in. All tests were conducted in triplicate.

The conducted peel tests are known as 90 RT "instant" Average Peel, 90 RT Average Peel, and 90 LT 10C Average Peel. All results are reported in pounds per inch, and all samples showed adhesive transfer.

**Blocking Testing:**

Data in Fig. 22 report data that demonstrates that certain of the Adhesive Systems A-F exhibit blocking-free properties or essentially so, under a temperature of 45°C and a pressure of 15 psi (approximately 103,421 Newton/m$^2$). It is contemplated that these non-blocking properties are also exhibited at relative humidity (RH) percentages of from 10% to 99%. When present, these anti-blocking properties provide a significant feature for the adhesives and enable them to be used in a wide array of applications such as labeling. More particularly, it is preferred that the adhesives exhibit these non-blocking properties before activation and most preferably, concurrently. That is, certain adhesive formulations exhibit non-blocking at a temperature of 45°C or 55oC, non-blocking at a pressure of 15 psi, and non-blocking at a relative humidity level from 10% to 90%.

A stack of 3 to 5 linerless labels in 2 inch by 2 inch is placed on a flat metal block in an oven with pre-set oven temperature, humidity and duration. A piece of the facestock in 2 inch by 2 inch is placed in between the metal surface and the label stack. On the other side of label stack, a mirror finishing aluminum block in 1 inch by 1 inch is placed on the top of label stack. Then a metal block of desired weight is placed on the top of aluminum block.

Upon the completion of test duration, the label stack is removed from the oven and is placed under ambient conditions for at least 30 minutes before inspection. Each label is separated from the stack manually and is inspected under light to check both adhesive side and printing side. Notes are taking for any adhesive coating transfers from adhesive side to printing side, or adhesive side sticks to print side to form a block of label stack. To those label shows no transfer by naked eye, label is further activated by IR lamp and the print side is inspected again under light to see if any shining spot which indicates the existing of adhesive transfer.

The following observations are made from the date of Fig. 22. Comparing Adhesive System D with Adhesive System A shows improved blocking but a slippage in peel performance, with the low cold adhesion of Adhesive System A being nearly unreadable by the Instron. Comparing either Adhesive Systems A or D with Adhesive Systems B and C improves blocking without losing good peel performance. Adhesive Systems B and C show statistically significant blocking enhancement with comparable or improved peel performance. Adhesive Systems B and E show superior performance over either Adhesive Systems C and F, respectively.

It will be understood that any embodiment, aspect, or detail thereof can be used with any other embodiment, aspect, or detail thereof described herein. Thus, the various adhesive systems and adhesive base polymers described herein can be used in conjunction with any of the labels, label assemblies, systems, and methods described herein.

It will thus be seen according to the present invention a highly advantageous linerless labels and activatable adhesives, systems, machines, and methods has been provided. While the invention has been described in connection with what is presently considered to be the most practical and preferred embodiment, it will be apparent to those of ordinary skill in the art that the invention is not to be limited to the disclosed embodiment, and that many modifications and equivalent arrangements may be made thereof within the scope of the invention, which scope is to be accorded the broadest interpretation of the appended claims so as to encompass all equivalent structures and products.

The inventors hereby state their intent to rely on the Doctrine of Equivalents to determine and assess the reasonably fair scope of their invention as it pertains to any apparatus, system, method or article not materially departing from but outside the literal scope of the invention as set out in the following claims.

The invention further relates to the following items:

1. A print and apply system configured to facilitate the application of a flow of linerless activatable labels to a flow of items, the system comprising:

a printer configured to print indicia on the flow of linerless activatable labels;
a cutter configured to cut linerless activatable labels to a specified length;
a thermal activation unit having an energy source configured to emit energy and activate the linerless activatable labels;
an applicator unit configured to receive and place the linerless activated labels and thus tacky labels onto a flow of items to be labeled;
one or more transporters that are configured to:

receive the linerless activatable labels,
transport the linerless activatable labels past the printer that then prints indicia on the linerless activatable labels,
transport the linerless activatable labels with indicia printed thereon past the cutter that then cuts the linerless activatable labels,
transport the printed and cut linerless activatable labels through emitted energy, and
transport the flow of linerless activatable labels to a position where the linerless activatable labels are applied to a flow of items and
wherein the linerless activatable label includes an adhesive having:

i. an adhesive base polymer including butyl acrylate, styrene, methyl methacrylate, methacrylic acid, acrylic acid, at least one multifunctional monomer, and at least one chain transfer agent,
ii. a plasticizer, and
iii. a tackifier.

2. The system of item 1, wherein the linerless activatable labels is presented to the system in roll form.

3. The system of item 1, wherein the item is selected from a group consisting of a bottle, a can, a container, a vessel, a bag, a pouch, an envelope, a parcel, a box and a cardboard box.

4. The system of item 1, wherein the thermal activating unit includes a plurality of emitters that are oriented normal to the direction at which the transporter transports the linerless activatable labels through the emitted energy that emanates from the energy source.

5. The system of item 4, wherein the adhesive exhibits an activation time of less than 1 second, preferably less than 0.5 seconds, preferably about 0.3 seconds.

6. The system of item 1, wherein the adhesive exhibits an open time of from 0.1 second to 10 minutes, preferably of from 10 seconds to 60 seconds.

7. The system of item 1, wherein the adhesive, upon activation, exhibits an initial tack to a substrate of at least 1.0 Newton.

8. The system of item 1, wherein the adhesive comprises a glyceryl tribenzoate plasticizer and a terpenephenolic resin emulsion tackifier.

9. The system of item 1, wherein the linerless activatable adhesive, upon activation, exhibits an open time of at least 72 hours.

10. The system of item 1, wherein the thermal activation unit further includes (iii) at least one quartz glass member positioned between the one or more energy sources and a label undergoing activation, wherein the quartz glass member has an IR transmission spectrum that transmits between at least about 75% and at least about 90% of energy from an IR emitter of the thermal activation unit.

11. The system of item 1, wherein the applicator unit is a roll-on applicator having a transport members with an air stream source to support the linerless activatable labels during transport along the roll-on applicator unit, a resilient roller that positions labels on items, respectively, and a pivot point along which the transport member swivels to place linerless activatable labels on items, respectively, in cooperation with the resilient roller.

12. The system of item 1, wherein the applicator unit is an indirect tamp-on unit having a soft conveyor belt with holes by which air streaming holds labels in place while being transported there along and to a label applicator location at which linerless activatable labels are applied to items, respectively, in response to movement toward the conveyor belt by a supply head mechanism.

13. The system of item 1, wherein the applicator unit is an indirect tamp-on unit having a vacuum plate assembly with transport belts and open passageways for vacuum support of linerless activatable labels while being transported there along and to a label applicator location at which linerless activatable labels are applied to items, respectively, in response to movement toward the vacuum plate assembly by a supply head mechanism.

14. The system of item 1, wherein the applicator unit is a blow-on unit having air supplies that hold the labels in place on transport belts that forward linerless activatable labels from the thermal activation unit to an apply position onto respective items that then engage the resilient roller to secure the linerless activatable labels on the respective items.

15. The system of item 1, further including at least one sensor and operational logic that controls operation of the system and receives input from the sensor, from readers of information particular to the linerless activatable labels being applied by the system, from at least one emitter of the thermal activation unit, and from at least one signal interface for a unit of the system, whereby the operational logic maintains a desired label environment temperature range and length of time range during which each linerless activatable label is exposed to the emitted energy and controls printer unit, cutter unit, activation unit and applicator unit sequencing and speed of operation.

16. The system in accordance with item 15, wherein the operational logic responds to abnormal conditions including loss of power to the system, gap in supply of labels, items or both, including placing the system in idle mode, shutting down the system, responding to simulation of item detection by one said sensor, and downloading from memory status of operation of one or more of the units for use at re-start of the system or unit.

17. A method for applying a flow of labels with a linerless activatable adhesive to a flow of items, the method comprising:

providing a flow of labels, wherein each label has a first surface and a second surface;
printing indicia on the first surface;
coating the second surface with an activatable adhesive that includes:

i. an adhesive base polymer including butyl acrylate, styrene, methyl methacrylate, methacrylic acid, acrylic acid, at least one multifunctional monomer, and at least one chain transfer agent,
ii. a plasticizer, and
iii. a tackifier;
providing a flow of items each having a second surface;
providing a source of energy that is configured to output radiant energy; exposing the first surface of the labels to the radiant energy that is output from the source of energy so the first surface of the label becomes tacky; and
contacting the first surface the labels with the second surface of the items, respectively.

18. The method according to item 17, further including printing the flow of labels with indicia prior to the step of exposing the flow of labels to the radiant energy.

19. The method according to item 17, wherein the step of contacting the labels with the items includes contacting one of the plurality of labels with one of the plurality of items at a rate of less than or equal to approximately 1,000 labels per minute.

20. An aqueous adhesive composition for a linerless activatable adhesive label which is activatable by exposure to IR radiation and exhibits pressure sensitive adhesive properties once activated by IR radiation or by heating, the adhesive composition comprising (i) an emulsion base copolymer exhibiting a glass transition temperature Tg above 25°C and a weight average molecular weight within a range of from 15,000 Daltons to 100,000 Daltons, (ii) the solid plasticizer for such copolymer exhibiting a melting point above 40°C, and (iii) the high softening point tackifier.

21. The aqueous adhesive composition of item 20, wherein the composition includes the tackifier and the plasticizer having at least 20% of a plant-based molecule.

22. An adhesive for a linerless activatable adhesive label comprising:

from about 20% to about 35% of an adhesive base polymer including at least one lower alkyl acrylate, styrene, methyl methacrylate, methacrylic acid, acrylic acid, at least one multifunctional monomer, and at least one chain transfer agent;
from about 50% to about 75% of the plasticizer; and
from about 5% to about 20% of the tackifier.

23. The adhesive according to item 22 wherein:

the adhesive base polymer is about 25.5% by weight of the adhesive;
the plasticizer is about 66% by weight of the adhesive; and
the tackifier is about 8.5% by weight of the adhesive.

24. The adhesive according to item 22, wherein the plasticizer is a material selected from dicyclohexyl phthalate, glyceryl tribenzoate, diphenyl phthalate, 1,4-cyclohexane dimethanol dibenzoate, and combinations thereof; and the tackifier is a material selected from the group consisting of pentaogthritol dimerized rosin ester, terpene phenolic resin emulsion, stabilized glycerol dimerized resin ester emulsion and combinations thereof.

25. The adhesive according to item 22, wherein the plasticizer has a bio-based content from glycerol, and the tackifier is provided in the form of an aqueous resin dispersion.

26. The adhesive according to item 26, wherein a plant-based molecule comprises at least 20% of the plasticizer.

27. The adhesive according to item 26, wherein the adhesive is configured to be activated by exposure to energy for less than one second, preferably for less than 0.5 second, more preferably for less than 0.3 second.

28. The adhesive of item 22 wherein the adhesive exhibits an open time of from 0.1 second to 72 hours, preferably of from 10 seconds to 60 seconds.

29. The adhesive of item 22 wherein the adhesive upon activation, exhibits an initial tack to a substrate of at least 1.0 Newton.

30. The adhesive of item 22, wherein the adhesive exhibits an activation time of less than 0.5 seconds and an open time of at least 10 seconds and an initial tack to a substrate of cardboard or steel of at least 1.0 Newton.

**Claims**

1. A linerless activatable adhesive label comprising:

a facestock layer;
an adhesive layer that is coupled to the facestock layer and includes:

i. an adhesive base polymer including butyl acrylate, styrene, methyl methacrylate, methacrylic acid, acrylic acid, at least one multifunctional monomer, and at least one chain transfer agent,
ii. a plasticizer, and

iii. a tackifier; and
the activatable adhesive label is configured to be exposed to a radiant energy; and
the radiant energy has a wavelength and an intensity that results in the adhesive layer becoming tacky after exposure to the radiant energy.

2. The linerless activatable adhesive label according to claim 1, wherein the facestock layer is not discolored after the exposure of the linerless activatable adhesive label to the radiant energy.

3. The linerless activatable adhesive label according to claim 1, wherein the facestock layer is made of a material selected from the group consisting of a paper, a polymer film, a metalized paper, a paper backed foil, a metal foil, and recycled paper.

4. The linerless activatable adhesive label according to claim 1, wherein:

the adhesive layer is activatable to exhibit tackiness;
the linerless activatable adhesive label is configured to be applied to an item; and
after the linerless activatable adhesive label is applied to the item, the adhesive layer's tackiness
prevents the linerless activatable adhesive label from inadvertently being removed from the item.

5. The linerless activatable adhesive label according to claim 4, wherein the linerless activatable adhesive label is configured to be repositioned for at least approximately one minute after the linerless activatable adhesive label is applied to the item.

6. The linerless activatable adhesive label according to claim 4, wherein:

the linerless activatable adhesive label is configured to be applied to the item; and
after the linerless activatable adhesive label is applied to the item, the label permanently bonds to the item after approximately two minutes.

7. The linerless activatable adhesive label according to claim 1 further comprising a primer or barrier layer that protects against excessive heating of the linerless activatable adhesive label during thermal printing on a surface of the linerless activatable adhesive label, the barrier layer comprising at least one polymeric material having styrene moieties.

8. The linerless activatable adhesive label according to claim 1, wherein a layer of the linerless activatable adhesive label includes an agent for promoting energy absorption, wherein the agent is selected from a group consisting of carbon black, dyes, colorants, pigments, inks, and combinations thereof, preferably carbon black.

9. The linerless activatable adhesive label according to claim 1, further including a reflective layer that is coupled between the facestock layer and the adhesive layer.

10. The linerless activatable adhesive label according to claim 9, wherein the reflective layer is made of a material that is applied as a coating to the bottom surface of the facestock layer and has a reflectivity value greater than approximately 90 percent.

11. The linerless activatable adhesive label according to claim 1, wherein:

the adhesive layer has a first surface;
the reflective layer has a second surface that is adjacent to the first surface; and
the second surface is textured.

12. The linerless activatable adhesive label according to claim 11, wherein the second surface's texture is configured to be retroreflective.

13. The linerless activatable adhesive label according to claim 1, wherein the facestock layer defines an outer face and an oppositely directed inner face; and the adhesive layer exhibits an activation time of less than 1 second, exhibits an open time of at least 30 seconds and exhibits an initial tack to a substrate of at least 1.0 Newton.

14. The linerless activatable adhesive label according to claim 13, wherein the adhesive layer is activated by exposure to electromagnetic radiation having a wavelength of from 0.1 micrometers to 10 micrometers.

15. The linerless activatable adhesive label according to claim 1, wherein the adhesive layer is non-blocking before activation, being non-blocking at a temperature of at least about 45°C at a pressure of from 15 psi.

16. The linerless activatable adhesive label according to claim 1, wherein the adhesive layer is activatable by exposure to IR radiation and exhibits pressure sensitive adhesive properties once activated by IR radiation or by heating, the adhesive composition comprising (i) an emulsion base copolymer exhibiting a glass transition temperature Tg above 25°C and a weight average molecular weight within a range of from 15,000 Daltons to 100,000 Daltons, (ii) the solid plasticizer for such copolymer exhibiting a melting point above 40°C, and (iii) the high softening point tackifier.

17. The linerless activatable adhesive label according to claim 16, wherein a plant-based molecule comprises at least 20 % of the plasticizer.

FIG. 1

FIG. 2

FIG. 3

FIG. 4

FIG. 4A

FIG. 4B

FIG. 4C

FIG. 4D

FIG. 4E

FIG. 4F

FIG. 4G

FIG. 4H

| lambda | Abs | I1/I2 | %Reflected | %Absorbed |
|--------|------|-------|------------|-----------|
| 1 | 0.04 | 1.10 | 91.20 | 8.80 |
| 1.2 | 0.12 | 1.32 | 75.86 | 24.14 |
| 1.4 | 0.15 | 1.41 | 70.79 | 29.21 |
| 1.5 | 0.22 | 1.66 | 60.26 | 39.74 |
| 1.6 | 0.20 | 1.58 | 63.10 | 36.90 |
| 1.8 | 0.16 | 1.45 | 69.18 | 30.82 |
| 2 | 0.23 | 1.70 | 58.88 | 41.12 |
| 2.2 | 0.25 | 1.78 | 56.23 | 43.77 |
| 2.4 | 0.50 | 3.16 | 31.62 | 68.38 |

FIG. 4I

FIG. 4J

FIG. 4K

PRINT CONTRAST: 80%

| LABEL NO. | TIME | TIME BETWEEN LABELS | ANSI GRADE HORIZONTAL BARCODES | ANSI GRADE ROTATED BARCODES | MICROFONT | BLACK SURFACE |
|---|---|---|---|---|---|---|
| 1 | | | 3,2 | 2,1 | | |
| 2 | | | 3,6 | 2,5 | | |
| 3 | | | 3,2 | 2,3 | | |
| 4 | | | 3,2 | 2,5 | | |
| 5 | | | 3,4 | 2,3 | | |
| AVERAGE ANSI GRADE: | | | 3,3 | 2,3 | | |

LABELS COUNT:      5
AVG. T/LABEL (S)      0,0

PRINT CONTRAST: 70%

| LABEL NO. | TIME | TIME BETWEEN LABELS | ANSI GRADE HORIZONTAL BARCODES | ANSI GRADE ROTATED BARCODES | MICROFONT | BLACK SURFACE |
|---|---|---|---|---|---|---|
| 1 | | | 3,1 | 2,9 | | |
| 2 | | | 3,1 | 2,7 | | |
| 3 | | | 2,7 | 2,5 | | |
| 4 | | | 3,0 | 2,5 | | |
| 5 | | | 3,0 | 2,9 | | |
| AVERAGE ANSI GRADE: | | | 3,0 | 2,7 | | |

LABELS COUNT:      5

FIG. 4L

148    148    150

PRINTED LABEL

FIG. 4M

150

h

148   148

d

FIG. 4N

123   122

FIG. 5

FIG. 6

FIG. 7

FIG. 7B

FIG. 8

FIG. 9

FIG. 10

FIG. 11

START — 380

PROVIDE A PLURALITY OF ACTIVATABLE ADHESIVE LABELS — 390

PROVIDE A PLURALITY OF ITEMS TO RECEIVE THE LABEL — 400

PROVIDE A PRINTER — 410

PRINT A FACESTOCK SIDE OF THE LABEL — 420

PROVIDE A SOURCE OF ENERGY — 430

EXPOSE ADHESIVE TO DIRECT RADIATION TO RENDER THE SURFACE OF THE ADHESIVE TACKY — 440

LABELS ARE APPLIED TO THE ITEMS AT A SELECTED RATE — 450

END — 460

FIG. 12

START — 381

PROVIDE A ROLL OF ACTIVATABLE ADHESIVE LABELS — 391

PROVIDE A PLURARITY OF ITEMS TO RECEIVE THE LABELS — 401

PROVIDE A PRINTER — 411

PRINT A FACESTOCK SIDE OF THE LABEL — 421

PROVIDE A CUTTER — 431

CUT UNACTIVATED LABEL TO LENGTH — 441

PROVIDE A SOURE OF ACTIVIATING ENERGY — 451

EXPOSE ADHESIVE TO DIRECT RADIATION OF RENDER THE SURFACE OF THE ADHESIVE TACKY — 461

LABELS ARE APPLIED TO THE ITEMS AT A SELECTED RATE — 462

END — 463

FIG. 13

EP 3 404 644 A1

FIG. 14

FIG. 15

FIG. 16

50

130

510

LABEL

110

## FIG. 17

130  210

110

470
120

530    530 530    520

## FIG. 18

~ 100/480/500

FIG. 19

~ 100/480/500

FIG. 20

600

~ 610

~ 620

~ 630

FIG. 21

| SAMPLE ID | PLASTICIZER /TACKFIER | % BIOBASED "NEW CARBON" CONTENT ESTIMATE IN PLASTICIZER | 90 RT "INSTANT" AVG PEEL (LB/IN)* | STDEV | 95% CL | 90 RT AVG PEEL (LB/IN)* | STDEV | 95% CL | 90 LT 10C AVG PEEL (LB/IN)* | STDEV | 95% CL |
|---|---|---|---|---|---|---|---|---|---|---|---|
| 15524 ("REF") | 250/650 | 0 | 0.24 | 0.03 | 0.09 | 0.35 | 0.02 | 0.06 | 0.21 | 0.01 | 0.03 |
| 496 | 250/102A | 0 | 0.19 | 0.01 | 0.03 | 0.49 | 0.04 | 0.12 | 0.18 | 0.03 | 0.09 |
| 500 | 250/730 | 0 | 0.2 | 0.01 | 0.03 | 0.34 | 0.06 | 0.18 | 0.19 | 0.01 | 0.03 |
| 477 | 260/650 | 22 | 0.17 | 0 | 0.00 | 0.30 | 0.02 | 0.06 | 0.10 | 0.02 | 0.06 |
| 499 | 260/102A | 22 | 0.31 | 0.01 | 0.03 | 0.50 | 0.04 | 0.12 | 0.22 | 0.02 | 0.06 |
| 492 | 260/730 | 22 | 0.24 | 0.04 | 0.12 | 0.44 | 0.07 | 0.21 | 0.19 | 0.01 | 0.03 |

| BLOCKING @ 45C/ 15PSI | BLOCKING @ 55C/ 15PSI | OPEN TIME | % BIOBASED "NEW CARBON" CONTENT ESTIMATE IN ADHESIVE | |
|---|---|---|---|---|
| F | – | 1-2 WEEKS | 9.5 | E-650 IS PETN ESTER OF DIMERIZED ROSIN |
| MP | F | 1-2 WEEKS | 9.5 | |
| MP | F | 1-2 WEEKS | 9.5 | E-730 IS GLYCEROL ESTER OF DIMERIZED ROSIN |
| P | F | 1-2 WEEKS | 23.2 | E-650 IS PETN ESTER OF DIMERIZED ROSIN |
| – | P | 1-2 WEEKS | 23.2 | |
| – | P | 1-2 WEEKS | 23.2 | E-730 IS GLYCEROL ESTER OF DIMERIZED ROSIN |

FIG. 22

Europäisches
Patentamt

European
Patent Office

Office européen
des brevets

## EUROPEAN SEARCH REPORT

Application Number

EP 18 18 0060

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2011/037732 A2 (AVERY DENNISON CORP [US]; KIAN KOUROSH [US]; LEE SOUPHONG [US]; HSEIH) 31 March 2011 (2011-03-31)<br>* figures 1-23 *<br>* paragraph [0037] *<br>* paragraph [0077] - paragraph [0080] *<br>* paragraph [0094] *<br>* paragraph [0127] - paragraph [0131] *<br>* paragraph [0133] *<br>* paragraph [0139] *<br>* paragraph [0185] *<br>* paragraph [0189] *<br>* claims 5-10,90 * | 1-17 | INV.<br>G09F3/10 |
| A | US 6 461 706 B1 (FREEDMAN MELVIN S [US] ET AL) 8 October 2002 (2002-10-08)<br>* column 11, line 13 - column 12, line 39; figure 4 * | 1-17 | |
| A | US 6 893 717 B1 (KUOLIH TSAI) 17 May 2005 (2005-05-17)<br>* the whole document * | 1-17 | TECHNICAL FIELDS SEARCHED (IPC)<br><br>G09F<br>B41J<br>B32B |

The present search report has been drawn up for all claims

| Place of search | Date of completion of the search | Examiner |
|---|---|---|
| The Hague | 4 October 2018 | Pantoja Conde, Ana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 18 0060

04-10-2018

| Patent document cited in search report | | Publication date | Patent family member(s) | | Publication date |
|---|---|---|---|---|---|
| WO 2011037732 | A2 | 31-03-2011 | AU | 2010286191 A1 | 31-03-2011 |
| | | | BR | PI1004349 A2 | 06-02-2018 |
| | | | CN | 102449086 A | 09-05-2012 |
| | | | EP | 2393897 A2 | 14-12-2011 |
| | | | ES | 2558439 T3 | 04-02-2016 |
| | | | KR | 20120081017 A | 18-07-2012 |
| | | | RU | 2011110166 A | 27-10-2013 |
| | | | US | 2012216951 A1 | 30-08-2012 |
| | | | US | 2013245174 A1 | 19-09-2013 |
| | | | US | 2013248103 A1 | 26-09-2013 |
| | | | WO | 2011037732 A2 | 31-03-2011 |
| | | | ZA | 201102036 B | 29-08-2012 |
| US 6461706 | B1 | 08-10-2002 | AT | 309905 T | 15-12-2005 |
| | | | DE | 69928316 D1 | 22-12-2005 |
| | | | DE | 69928316 T2 | 24-08-2006 |
| | | | EP | 0950511 A2 | 20-10-1999 |
| | | | US | 6461706 B1 | 08-10-2002 |
| | | | US | 2002146551 A1 | 10-10-2002 |
| US 6893717 | B1 | 17-05-2005 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 30730612 A
- US 6492019 B, Shipston
- US 6326450 B, Shipston
- US 6500536 B, Yamada
- US 6803100 B, Hintz
- US 7026047 B, Krolzig
- US 5569515 A, Rice
- US 5702771 A, Shipston
- US 5749990 A
- US 5480502 A, Rello
- US 6388692 B, Iwata
- US 6501495 B, Ichikawa
- US 3461014 A, James
- US 4468274 A, Adachi
- US 6031553 A, Nagamoto
- US 3247041 A, Henderson
- US 4156626 A, Souder
- US 6043190 A, Ichikawa
- US 20030041963 A
- US 20040166309 A, Gong
- US 119006 A
- US 1047428 W
- WO 2011037732 A, Kian
- US 4745026 A, Tsukahara
- US 4784714 A, Shibata
- US 5895552 A, Matsuguchi
- US 5922169 A, Chodacki
- US 6006808 A, Ewert
- US 7029549 B, Von Folkenhausen
- US 6899155 B, Francke
- US 5964975 A, Hinton
- US 6471802 B, Williamson
- US 6767102 B, Heenan
- US 2304787 A
- US 2569140 A
- US 2783172 A, Avery Dennison

**Non-patent literature cited in the description**

- Handbook of Pressure Sensitive Adhesive Technology. 1989
- Handbook. 172-176